# EUROPEAN PATENT APPLICATION

(11) **EP 4 765 479 A1**
(43) Date of publication of application: **24.06.2026**
(21) Application number: 24856794.3
(22) Date of filing: 20.08.2024
(51) Int. Cl.: H01Q 1/24, H04M 1/02

(54) **ELECTRONIC APPARATUS INCLUDING FEEDING STRUCTURE OF ANTENNA**

(30) Priority: 23.08.2023 KR 20230110905; 23.10.2023 KR 20230142503
(71) Applicant: Samsung Electronics Co., Ltd., Suwon-si, Gyeonggi-do 16677 (KR)
(72) Inventor: NAM, Hojung, Suwon-si Gyeonggi-do 16677 (KR); KIM, Sewoong, Suwon-si Gyeonggi-do 16677 (KR); PARK, Sungkoo, Suwon-si Gyeonggi-do 16677 (KR); SEOL, Kyungmoon, Suwon-si Gyeonggi-do 16677 (KR); SON, Cheolhong, Suwon-si Gyeonggi-do 16677 (KR); LEE, Kookjoo, Suwon-si Gyeonggi-do 16677 (KR); CHOE, Jaewon, Suwon-si Gyeonggi-do 16677 (KR); HWANG, Soonho, Suwon-si Gyeonggi-do 16677 (KR)
(74) Representative: HGF
(86) International application number: PCT/KR2024/012362
(87) International publication number: WO 2025/042183

(57) **Abstract**

The electronic apparatus includes a first housing, a second housing, a third housing, and a wireless communication circuit. The first housing includes a first side surface portion, a second side surface portion opposite to the first side surface portion, and a third side surface portion extending from the first side surface portion to the second side surface portion. The second housing is rotatably coupled to the first side surface portion of the first housing. The third housing is rotatably coupled to the second side surface portion of the first housing. The third side surface portion of the first housing includes a conductive portion. In a state in which the second housing and the third housing are rotated to overlap one surface of the first housing, a slot aligned with respect to a first point of the conductive portion is formed between the second housing and the third housing. The wireless communication circuit is electrically connected to the first point of the conductive portion and is configured to transmit or receive an RF signal by using the conductive portion. Various embodiments are possible.

## Description

### [Technical Field]

The present disclosure relates to an electronic device including a feeding structure of an antenna.

### [Background Art]

An electronic device such as a smartphone may include an antenna for performing wireless communication. Such an antenna may include a feeding structure connecting a transceiver of a wireless signal to a radiator. The feeding structure may affect performance of the antenna such as radiation efficiency.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, an electronic device may comprise a first housing, a second housing, a third housing, and wireless communication circuitry. The first housing may include a first side part, a second side part opposite to the first side part, and a third side part extending from the first side part to the second side part. The second housing may be rotatably coupled to the first side part of the first housing. The third housing may be rotatably coupled to the second side part of the first housing. The third side part of the first housing may include a conductive portion. In a state in which the second housing and the third housing are rotated to overlap a surface of the first housing, a slot aligned with a first point of the conductive portion may be formed between the second housing and the third housing. The wireless communication circuitry may be electrically connected to the first point of the conductive portion and configured to transmit or receive a radio frequency (RF) signal using the conductive portion.

According to an embodiment, an electronic device may comprise a plurality of housing parts including a first housing part and a second housing part, and at least one wireless communication circuitry. The plurality of housing parts may be foldable such that the first housing part and the second housing part face each other. The first housing part may include a conductive portion. The second housing part may include a non-conductive portion. In a state in which the plurality of housing parts are folded such that the first housing part and the second housing part face each other, a first point of the conductive portion may be aligned with the non-conductive portion. The at least one wireless communication circuitry may be electrically connected to the first point of the conductive portion and configured to transmit or receive a radio frequency (RF) signal using the conductive portion.

### [Description of the Drawings]

FIG. 1 is a block diagram of an electronic device in a network environment according to various embodiments.
FIG. 2A is a view illustrating an exemplary electronic device according to an embodiment.
FIG. 2B is a view illustrating an exemplary electronic device according to an embodiment.
FIG. 2C is a view illustrating an exemplary electronic device according to an embodiment.
FIG. 2D is a view illustrating an exemplary electronic device according to an embodiment.
FIG. 3A is a view exemplarily illustrating an electronic device in an unfolded state according to an embodiment.
FIG. 3B is a view exemplarily illustrating an electronic device in a first folded state according to an embodiment.
FIG. 3C is a view exemplarily illustrating an electronic device in a first folded state according to an embodiment.
FIG. 3D is a view exemplarily illustrating an electronic device in a first folded state according to an embodiment.
FIG. 3E is a view exemplarily illustrating an electronic device in a second folded state (e.g., FIG. 2C) according to an embodiment.
FIG. 3F is a view exemplarily illustrating an electronic device in a third folded state (e.g., FIG. 2D) according to an embodiment.
FIG. 4 is a view exemplarily illustrating an electronic device in a first folded state (e.g., FIG. 2B) according to an embodiment.
FIG. 5 is a view exemplarily illustrating an electronic device in a first folded state (e.g., FIG. 2B) according to an embodiment.
FIG. 6A illustrates an electronic device in an unfolded state according to a comparative example.
FIG. 6B illustrates an electronic device in a first folded state according to a comparative example.
FIG. 6C illustrates an electronic device in a first folded state according to a comparative example.
FIG. 7A is a view illustrating a distribution of an electric field of an electronic device in a first folded state according to an embodiment.
FIG. 7B is a view illustrating a distribution of an electric field of an electronic device in a first folded state according to an embodiment.
FIG. 8A is a view illustrating a distribution of an electric field of an electronic device in a first folded state according to a comparative example.
FIG. 8B is a view illustrating a distribution of an electric field of an electronic device in a first folded state according to a comparative example.
FIG. 9A is a view illustrating total efficiency of an electronic device and an antenna in a first folded state together according to an embodiment.
FIG. 9B is a view illustrating total efficiency of an electronic device and an antenna in a first folded state together according to a comparative example.
FIG. 10A is a view illustrating total efficiency of an electronic device and an antenna in a second folded state and a third folded state together according to an embodiment.
FIG. 10B is a view illustrating total efficiency of an electronic device and an antenna in a second folded state and a third folded state together according to a comparative example.
FIG. 11 is a graph illustrating total efficiency and radiation efficiency.
FIG. 12 is a Smith chart illustrating impedance according to a state of an electronic device.
FIG. 13A is a view illustrating total efficiency of an electronic device and an antenna in a second folded state and a third folded state together according to an embodiment.
FIG. 13B is a view illustrating total efficiency of an electronic device and an antenna in a second folded state and a third folded state together according to a comparative example.
FIG. 14A is a view illustrating total efficiency of an electronic device and an antenna in a first folded state, a second folded state, and a third folded state together according to an embodiment.
FIG. 14B is a view illustrating total efficiency of an electronic device and an antenna in a first folded state, a second folded state, and a third folded state together according to a comparative example.
FIG. 15 illustrates examples of an electronic device in a first folded state, having feeding points at different locations.
FIG. 16A is a view illustrating total efficiency according to the examples of FIG. 15.
FIG. 16B is a view illustrating total efficiency according to the examples of FIG. 15.
FIG. 17A is a graph illustrating total efficiency of the electronic device of the example E1 of FIG. 15 according to a state.
FIG. 17B is a graph illustrating total efficiency of the electronic device of the example E2 of FIG. 15 according to a state.
FIG. 17C is a graph illustrating total efficiency of the electronic device of the example E3 of FIG. 15 according to a state.
FIG. 18 is a view illustrating total efficiency according to a width of a slot.
FIG. 19 is a graph illustrating total efficiency according to whether a feeding point of a first housing is aligned with a non-conductive portion of a third housing.
FIG. 20A illustrates an exemplary electronic device according to an embodiment.
FIG. 20B illustrates an exemplary electronic device according to an embodiment.
FIG. 20C illustrates an exemplary electronic device according to an embodiment.
FIG. 21A illustrates an exemplary electronic device according to an embodiment.
FIG. 21B illustrates an exemplary electronic device according to an embodiment.
FIG. 21C illustrates an exemplary electronic device according to an embodiment.
FIG. 22A illustrates an exemplary electronic device according to an embodiment.
FIG. 22B illustrates an exemplary electronic device according to an embodiment.
FIG. 22C illustrates an exemplary electronic device according to an embodiment.

### [Mode for Invention]

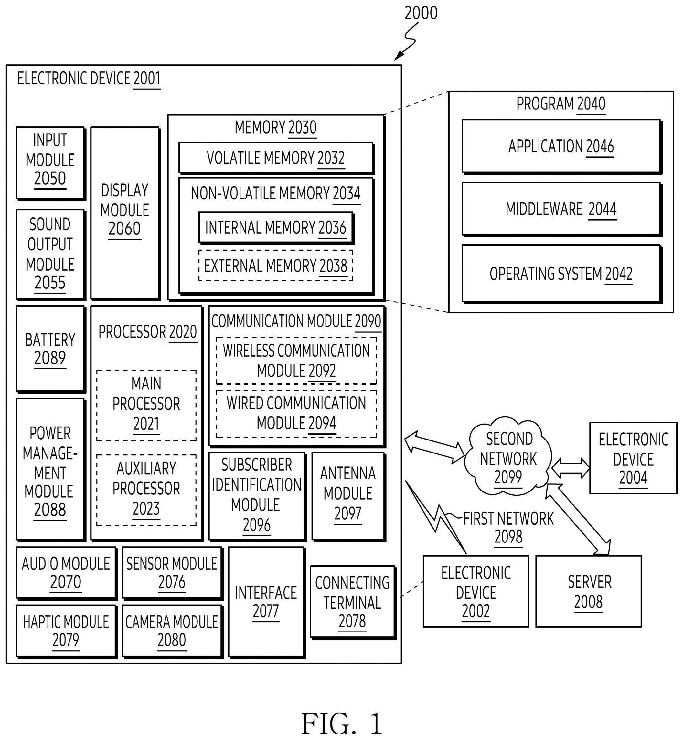

FIG. 1 is a block diagram illustrating an electronic device 2001 in a network environment 2000 according to various embodiments. Referring to FIG. 1, the electronic device 2001 in the network environment 2000 may communicate with an electronic device 2002 via a first network 2098 (e.g., a short-range wireless communication network), or at least one of an electronic device 2004 or a server 2008 via a second network 2099 (e.g., a long-range wireless communication network). According to an embodiment, the electronic device 2001 may communicate with the electronic device 2004 via the server 2008. According to an embodiment, the electronic device 2001 may include a processor 2020, memory 2030, an input module 2050, a sound output module 2055, a display module 2060, an audio module 2070, a sensor module 2076, an interface 2077, a connecting terminal 2078, a haptic module 2079, a camera module 2080, a power management module 2088, a battery 2089, a communication module 2090, a subscriber identification module(SIM) 2096, or an antenna module 2097. In some embodiments, at least one of the components (e.g., the connecting terminal 2078) may be omitted from the electronic device 2001, or one or more other components may be added in the electronic device 2001. In some embodiments, some of the components (e.g., the sensor module 2076, the camera module 2080, or the antenna module 2097) may be implemented as a single component (e.g., the display module 2060).

The processor 2020 may execute, for example, software (e.g., a program 2040) to control at least one other component (e.g., a hardware or software component) of the electronic device 2001 coupled with the processor 2020, and may perform various data processing or computation. According to an embodiment, as at least part of the data processing or computation, the processor 2020 may store a command or data received from another component (e.g., the sensor module 2076 or the communication module 2090) in volatile memory 2032, process the command or the data stored in the volatile memory 2032, and store resulting data in non-volatile memory 2034. According to an embodiment, the processor 2020 may include a main processor 2021 (e.g., a central processing unit (CPU) or an application processor (AP)), or an auxiliary processor 2023 (e.g., a graphics processing unit (GPU), a neural processing unit (NPU), an image signal processor (ISP), a sensor hub processor, or a communication processor (CP)) that is operable independently from, or in conjunction with, the main processor 2021. For example, when the electronic device 2001 includes the main processor 2021 and the auxiliary processor 2023, the auxiliary processor 2023 may be adapted to consume less power than the main processor 2021, or to be specific to a specified function. The auxiliary processor 2023 may be implemented as separate from, or as part of the main processor 2021.

The auxiliary processor 2023 may control at least some of functions or states related to at least one component (e.g., the display module 2060, the sensor module 2076, or the communication module 2090) among the components of the electronic device 2001, instead of the main processor 2021 while the main processor 2021 is in an inactive (e.g., sleep) state, or together with the main processor 2021 while the main processor 2021 is in an active state (e.g., executing an application). According to an embodiment, the auxiliary processor 2023 (e.g., an image signal processor or a communication processor) may be implemented as part of another component (e.g., the camera module 2080 or the communication module 2090) functionally related to the auxiliary processor 2023. According to an embodiment, the auxiliary processor 2023 (e.g., the neural processing unit) may include a hardware structure specified for artificial intelligence model processing. An artificial intelligence model may be generated by machine learning. Such learning may be performed, e.g., by the electronic device 2001 where the artificial intelligence is performed or via a separate server (e.g., the server 2008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 2030 may store various data used by at least one component (e.g., the processor 2020 or the sensor module 2076) of the electronic device 2001. The various data may include, for example, software (e.g., the program 2040) and input data or output data for a command related thereto. The memory 2030 may include the volatile memory 2032 or the non-volatile memory 2034.

The program 2040 may be stored in the memory 2030 as software, and may include, for example, an operating system (OS) 2042, middleware 2044, or an application 2046.

The input module 2050 may receive a command or data to be used by another component (e.g., the processor 2020) of the electronic device 2001, from the outside (e.g., a user) of the electronic device 2001. The input module 2050 may include, for example, a microphone, a mouse, a keyboard, a key (e.g., a button), or a digital pen (e.g., a stylus pen).

The sound output module 2055 may output sound signals to the outside of the electronic device 2001. The sound output module 2055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 2060 may visually provide information to the outside (e.g., a user) of the electronic device 2001. The display module 2060 may include, for example, a display, a hologram device, or a projector and control circuitry to control a corresponding one of the display, hologram device, and projector. According to an embodiment, the display module 2060 may include a touch sensor adapted to detect a touch, or a pressure sensor adapted to measure the intensity of force incurred by the touch.

The audio module 2070 may convert a sound into an electrical signal and vice versa. According to an embodiment, the audio module 2070 may obtain the sound via the input module 2050, or output the sound via the sound output module 2055 or a headphone of an external electronic device (e.g., an electronic device 2002) directly (e.g., wiredly) or wirelessly coupled with the electronic device 2001.

The sensor module 2076 may detect an operational state (e.g., power or temperature) of the electronic device 2001 or an environmental state (e.g., a state of a user) external to the electronic device 2001, and then generate an electrical signal or data value corresponding to the detected state. According to an embodiment, the sensor module 2076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 2077 may support one or more specified protocols to be used for the electronic device 2001 to be coupled with the external electronic device (e.g., the electronic device 2002) directly (e.g., wiredly) or wirelessly. According to an embodiment, the interface 2077 may include, for example, a high definition multimedia interface (HDMI), a universal serial bus (USB) interface, a secure digital (SD) card interface, or an audio interface.

A connecting terminal 2078 may include a connector via which the electronic device 2001 may be physically connected with the external electronic device (e.g., the electronic device 2002). According to an embodiment, the connecting terminal 2078 may include, for example, an HDMI connector, a USB connector, an SD card connector, or an audio connector (e.g., a headphone connector).

The haptic module 2079 may convert an electrical signal into a mechanical stimulus (e.g., a vibration or a movement) or electrical stimulus which may be recognized by a user via his tactile sensation or kinesthetic sensation. According to an embodiment, the haptic module 2079 may include, for example, a motor, a piezoelectric element, or an electric stimulator.

The camera module 2080 may capture a still image or moving images. According to an embodiment, the camera module 2080 may include one or more lenses, image sensors, image signal processors, or flashes.

The power management module 2088 may manage power supplied to the electronic device 2001. According to an embodiment, the power management module 2088 may be implemented as at least part of, for example, a power management integrated circuit (PMIC).

The battery 2089 may supply power to at least one component of the electronic device 2001. According to an embodiment, the battery 2089 may include, for example, a primary cell which is not rechargeable, a secondary cell which is rechargeable, or a fuel cell.

The communication module 2090 may support establishing a direct (e.g., wired) communication channel or a wireless communication channel between the electronic device 2001 and the external electronic device (e.g., the electronic device 2002, the electronic device 2004, or the server 2008) and performing communication via the established communication channel. The communication module 2090 may include one or more communication processors that are operable independently from the processor 2020 (e.g., the application processor (AP)) and supports a direct (e.g., wired) communication or a wireless communication. According to an embodiment, the communication module 2090 may include a wireless communication module 2092 (e.g., a cellular communication module, a short-range wireless communication module, or a global navigation satellite system (GNSS) communication module) or a wired communication module 2094 (e.g., a local area network (LAN) communication module or a power line communication (PLC) module). A corresponding one of these communication modules may communicate with the external electronic device via the first network 2098 (e.g., a short-range communication network, such as Bluetooth^{™}, wireless-fidelity (Wi-Fi) direct, or infrared data association (IrDA)) or the second network 2099 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 2092 may identify and authenticate the electronic device 2001 in a communication network, such as the first network 2098 or the second network 2099, using subscriber information (e.g., international mobile subscriber identity (IMSI)) stored in the subscriber identification module 2096.

The wireless communication module 2092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 2092 may support a high-frequency band (e.g., the mmWave band) to achieve, e.g., a high data transmission rate. The wireless communication module 2092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 2092 may support various requirements specified in the electronic device 2001, an external electronic device (e.g., the electronic device 2004), or a network system (e.g., the second network 2099). According to an embodiment, the wireless communication module 2092 may support a peak data rate (e.g., 20Gbps or more) for implementing eMBB, loss coverage (e.g., 2064dB or less) for implementing mMTC, or U-plane latency (e.g., 0.5ms or less for each of downlink (DL) and uplink (UL), or a round trip of 20ms or less) for implementing URLLC.

The antenna module 2097 may transmit or receive a signal or power to or from the outside (e.g., the external electronic device) of the electronic device 2001. According to an embodiment, the antenna module 2097 may include an antenna including a radiating element composed of a conductive material or a conductive pattern formed in or on a substrate (e.g., a printed circuit board (PCB)). According to an embodiment, the antenna module 2097 may include a plurality of antennas (e.g., array antennas). In such a case, at least one antenna appropriate for a communication scheme used in the communication network, such as the first network 2098 or the second network 2099, may be selected, for example, by the communication module 2090 (e.g., the wireless communication module 2092) from the plurality of antennas. The signal or the power may then be transmitted or received between the communication module 2090 and the external electronic device via the selected at least one antenna. According to an embodiment, another component (e.g., a radio frequency integrated circuit (RFIC)) other than the radiating element may be additionally formed as part of the antenna module 2097.

According to various embodiments, the antenna module 2097 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 2001 and the external electronic device 2004 via the server 2008 coupled with the second network 2099. Each of the electronic devices 2002 or 2004 may be a device of a same type as, or a different type, from the electronic device 2001. According to an embodiment, all or some of operations to be executed at the electronic device 2001 may be executed at one or more of the external electronic devices 2002, 2004, or 2008. For example, if the electronic device 2001 should perform a function or a service automatically, or in response to a request from a user or another device, the electronic device 2001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 2001. The electronic device 2001 may provide the outcome, with or without further processing of the outcome, as at least part of a reply to the request. To that end, a cloud computing, distributed computing, mobile edge computing (MEC), or client-server computing technology may be used, for example. The electronic device 2001 may provide ultra low-latency services using, e.g., distributed computing or mobile edge computing. In another embodiment, the external electronic device 2004 may include an internet-of-things (IoT) device. The server 2008 may be an intelligent server using machine learning and/or a neural network. According to an embodiment, the external electronic device 2004 or the server 2008 may be included in the second network 2099. The electronic device 2001 may be applied to intelligent services (e.g., smart home, smart city, smart car, or healthcare) based on 5G communication technology or IoT-related technology.

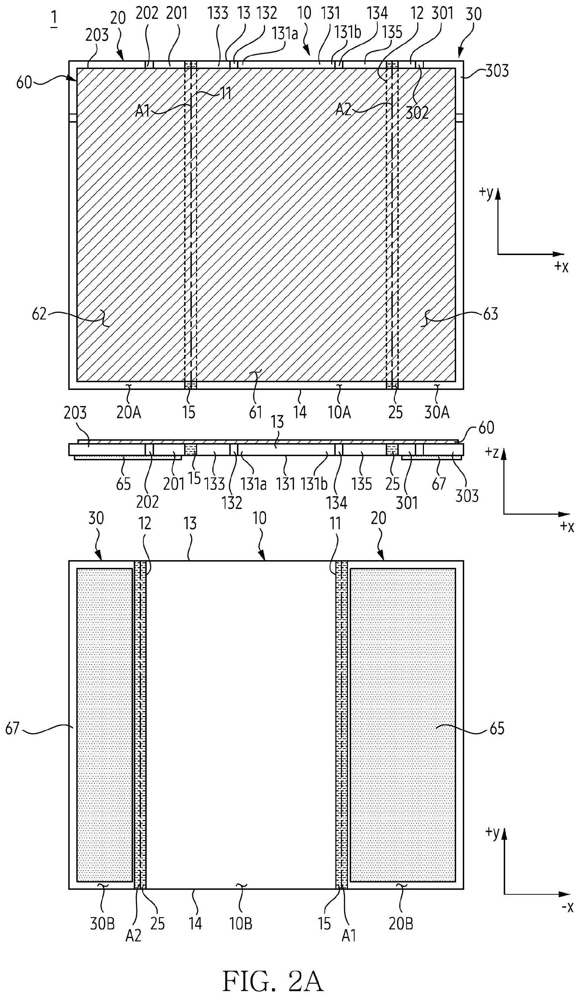

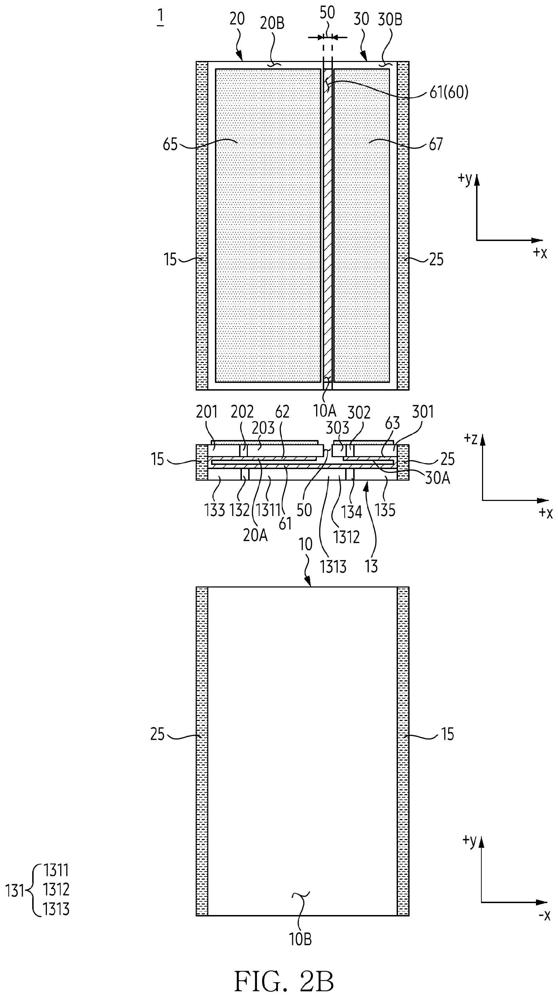

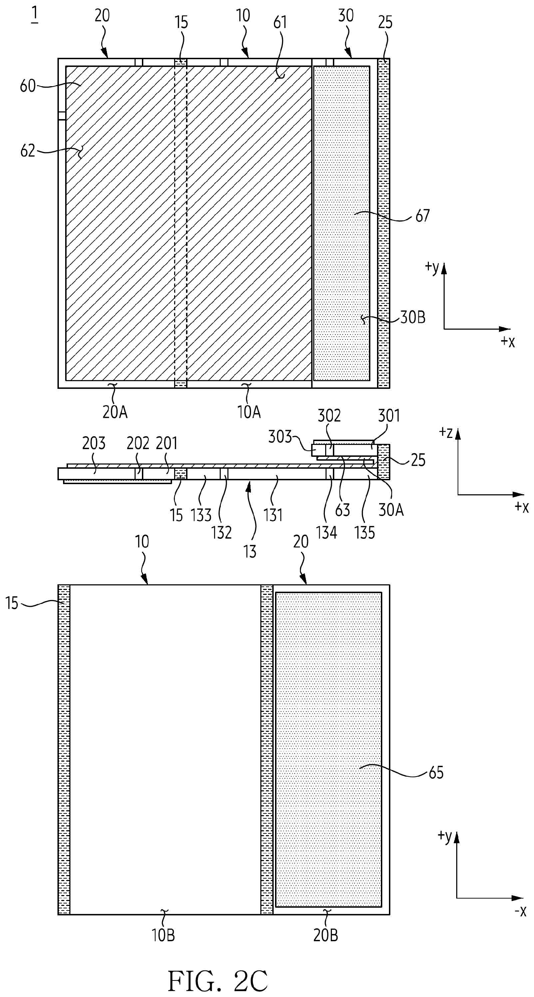

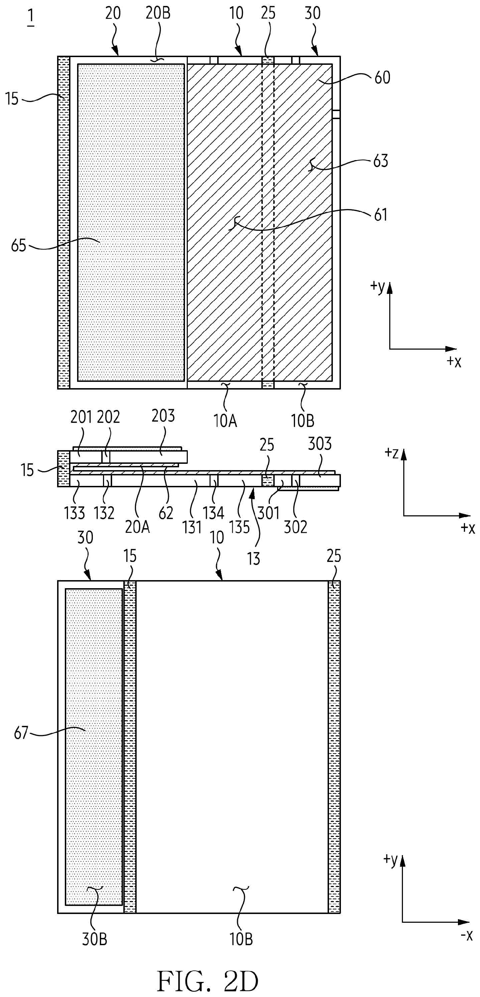

FIGS. 2A, 2B, 2C, and 2D are views illustrating an exemplary electronic device according to an embodiment. FIG. 2A illustrates an electronic device 1 in an unfolded state. FIGS. 2B, 2C, and 2D illustrate the electronic device 1 in a folded state. In FIGS. 2A, 2B, 2C, and 2D, an orthogonal coordinate system is illustrated. Since a second housing 20 and a third housing 30 are mutually rotatable with respect to a first housing 10, the orthogonal coordinate system is based on the first housing 10. For example, an x-axis may mean a width direction of the first housing 10, a y-axis may mean a length direction of the first housing 10, and a z-axis may mean a thickness direction of the first housing 10.

Referring to FIG. 2A, the electronic device 1 according to an embodiment may include a first housing 10, a second housing 20, a third housing 30, a first hinge structure 15, and a second hinge structure 25.

In an embodiment, the first housing 10 and the second housing 20 may be disposed on both sides about the first hinge structure 15 or a first axis A1. The second housing 20 may rotate with respect to the first housing 10 about the first hinge structure 15. For example, the second housing 20 may rotate with respect to the first housing 10 about the first axis A1, but is not limited thereto. For example, the first housing 10 and the second housing 20 may respectively rotate about two axes parallel to the first axis A1, which are provided by the first hinge structure 15. In an embodiment, the first axis A1 and a second axis A2 may be parallel to a length direction (e.g., a y-axis direction) of the first housing 10.

In an embodiment, the first housing 10 and the third housing 30 may be disposed on both sides about the second hinge structure 25 or the second axis A2. The third housing 30 may rotate with respect to the first housing 10 about the second hinge structure 25. For example, the third housing 30 may rotate with respect to the first housing 10 about the second axis A2, but is not limited thereto. For example, the first housing 10 and the third housing 30 may respectively rotate about two axes parallel to the second axis A2, which are provided by the second hinge structure 25. In an embodiment, the electronic device 1 may be referred to as a foldable device.

In an embodiment, the first housing 10 may include a first side part 11, a second side part 12, a third side part 13, and a fourth side part 14. The first side part 11, the second side part 12, the third side part 13, and the fourth side part 14 may form a side surface of the first housing 10. The first side part 11 and the second side part 12 may respectively extend in the length direction (e.g., the y-axis direction) of the first housing 10. The third side part 13 and the fourth side part 14 may respectively extend in a width direction (e.g., an x-axis direction) of the first housing 10.

In an embodiment, the first side part 11 may extend along the first axis A1. For example, the first side part 11 may extend substantially parallel to the first axis A1. The second side part 12 may extend along the second axis A2. For example, the second side part 12 may extend substantially parallel to the second axis A2. In an embodiment, the second side part 12 may be symmetrical to the first side part 11. For example, a direction in which the first side part 11 faces and a direction in which the second side part 12 faces may be opposite to each other. Based on the illustration of FIG. 2A, the first side part 11 may face the second housing 20, and the second side part 12 may face the third housing 30. The second side part 12 may be substantially parallel to the first side part 11.

In an embodiment, the first side part 11 may include a first end portion and a second end portion, which are located opposite to each other. In an embodiment, the second side part 12 may include a first end portion and a second end portion, which are located opposite to each other. The first end portion of the first side part 11 may be aligned with the first end portion of the second side part 12. The second end portion of the first side part 11 may be aligned with the second end portion of the second side part 12.

In an embodiment, the third side part 13 may extend from the first side part 11 to the second side part 12. In an embodiment, the third side part 13 may extend from the first side part 11 to the second side part 12. For example, the third side part 13 may extend from the first end portion of the first side part 11 to the first end portion of the second side part 12. The third side part 13 may extend substantially perpendicular to the first axis A1 or the second axis A2. In an embodiment, the fourth side part 14 may be spaced apart from the third side part 13 and may extend from the first side part 11 to the second side part 12. For example, the fourth side part 14 may extend from the second end portion of the first side part 11 to the second end portion of the second side part 12. The fourth side part 14 may extend substantially perpendicular to the first axis A1 or the second axis A2. The fourth side part 14 may be symmetrical to the third side part 13. For example, a direction in which the third side part 13 faces and a direction in which the fourth side part 14 faces may be opposite to each other.

In an embodiment, the third side part 13 may be at least partially exposed to an outside of the electronic device 1. For example, the third side part 13 may form a portion of the side surface of the first housing 10. The side surface of the first housing 10 may extend from a periphery of a first surface 10A to a periphery of a second surface 10B. In an embodiment, the fourth side part 14 may be at least partially exposed to the outside of the electronic device 1. For example, the fourth side part 14 may form another portion of the side surface of the first housing 10.

In an embodiment, the second housing 20 may be rotatably coupled to the first housing 10. For example, the second housing 20 may be rotatably coupled to the first side part 11 of the first housing 10. For example, the second housing 20 may be connected to the first side part 11 of the first housing 10 through the first hinge structure 15. By the first hinge structure 15, the second housing 20 may rotate with respect to the first housing 10. For example, the first hinge structure 15 may include a first shaft extending parallel to the first axis A1, a first arm connected to the first shaft so as to be linked with rotation of the first shaft, and a first hinge plate connected to the first arm so as to be linked with rotation of the first arm. The first hinge plate may be connected to the first side part 11 of the first housing 10. Through this, the first housing 10 may rotate with respect to the first hinge structure 15. In addition, the first hinge structure 15 may include a second shaft extending parallel to the first axis A1, a second arm connected to the second shaft so as to be linked with rotation of the second shaft, and a second hinge plate connected to the second arm so as to be linked with rotation of the second arm. The second hinge plate may be connected to the second housing 20. Through this, the second housing 20 may rotate with respect to the first hinge structure 15. Optionally or additionally, the first hinge structure 15 may include a first link member (e.g., a plurality of gears) linking rotation of the first shaft and the second shaft. Through this, rotation of the first housing 10 and the second housing 20 with respect to the first hinge structure 15 may be linked. However, a configuration of the first hinge structure 15 for mutually rotating the first housing 10 and the second housing 20 is not limited by the above-described example, and various mechanisms may be applied.

In an embodiment, the third housing 30 may be rotatably coupled to the first housing 10. For example, the third housing 30 may be rotatably coupled to the second side part 12 of the first housing 10. For example, the third housing 30 may be connected to the second side part 12 of the first housing 10 through the second hinge structure 25. By the second hinge structure 25, the third housing 30 may rotate with respect to the first housing 10. For example, the second hinge structure 25 may include a third shaft extending parallel to the second axis A2, a third arm connected to the third shaft so as to be linked with rotation of the third shaft, and a third hinge plate connected to the third arm so as to be linked with rotation of the third arm. The third hinge plate may be connected to the second side part 12 of the first housing 10. Through this, the third housing 30 may rotate with respect to the second hinge structure 25. In addition, the second hinge structure 25 may include a fourth shaft extending parallel to the second axis A2, a fourth arm connected to the fourth shaft so as to be linked with rotation of the fourth shaft, and a fourth hinge plate connected to the fourth arm so as to be linked with rotation of the fourth arm. The fourth hinge plate may be connected to the third housing 30. Through this, the third housing 30 may rotate with respect to the second hinge structure 25. Optionally or additionally, the second hinge structure 25 may include a second link member (e.g., a plurality of gears) linking rotation of the third shaft and the fourth shaft. Through this, rotation of the first housing 10 and the third housing 30 with respect to the second hinge structure 25 may be linked. However, a configuration of the second hinge structure 25 for mutually rotating the first housing 10 and the third housing 30 is not limited by the above-described example, and various mechanisms may be applied.

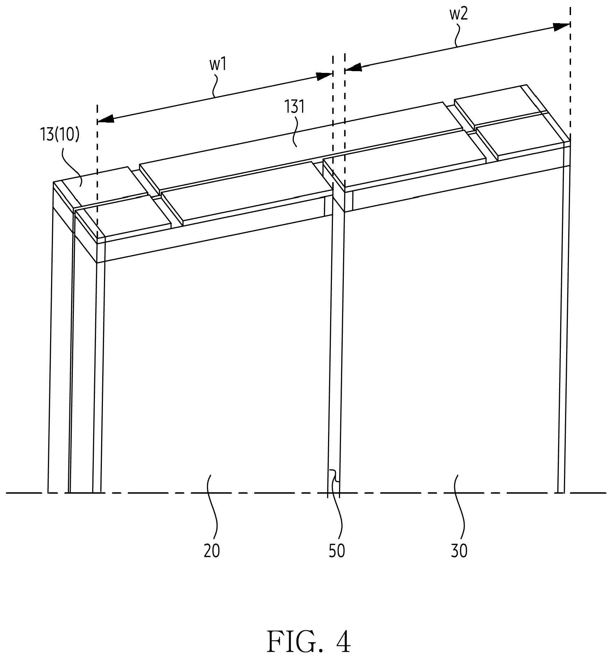

In an embodiment, the second housing 20 and the third housing 30 may have shapes that are asymmetrical to each other. For example, a width of the second housing 20 may be longer than a width of the third housing 30, but is not limited thereto. For example, the second housing 20 and the third housing 30 may form shapes that are substantially symmetrical to each other, and/or the width (e.g., a first width w1 of FIG. 4) of the second housing 20 and the width (e.g., a second width w2 of FIG. 4) of the third housing 30 may be substantially equal to each other. The widths of the second housing 20 and the third housing 30 may be, for example, lengths according to a direction perpendicular to the first axis A1 or the second axis A2.

The electronic device 1 according to an embodiment may include a plurality of displays (e.g., the display module 2060 of FIG. 1). For example, the electronic device 1 may include a first display 60, a second display 65, and a third display 67. Alternatively or optionally, the electronic device 1 may not include the second display 65 and/or the third display 67.

In an embodiment, the first display 60 may be disposed on the first housing 10, the second housing 20, and the third housing 30. For example, the first display 60 may be accommodated in a recess formed by the first housing 10, the second housing 20, and the third housing 30. In an embodiment, the first display 60 may extend from the second housing 20, across the first housing 10, to the third housing 30. For example, the first display 60 may include a first part 61, a second part 62, and a third part 63. The first part 61 may be aligned with the first housing 10. For example, the first part 61 may be disposed on the first housing 10. For example, the first part 61 may be at least partially accommodated in the recess formed by the first housing 10. The second part 62 may be aligned with the second housing 20. For example, the second part 62 may be disposed on the second housing 20. For example, the second part 62 may be at least partially accommodated in a recess formed by the second housing 20. The third part 63 may be aligned with the third housing 30. For example, the third part 63 may be disposed on the third housing 30. For example, the third part 63 may be at least partially accommodated in the recess formed by the third housing 30.

In an embodiment, the second part 62 may extend from a first side of the first part 61. The third part 63 may extend from a second side of the first part 61 opposite to the first side. In an embodiment, the second part 62 and the third part 63 may have shapes that are asymmetrical to each other. For example, a width of the second part 62 may be longer than a width of the third part 63, but is not limited thereto. For example, the second part 62 and the third part 63 may be formed in shapes that are substantially symmetrical to each other, and/or the width of the second part 62 and the width of the third part 63 may be substantially equal to each other. In this case, optionally, as illustrated in FIG. 4, the width of the second housing 20 and the width of the third housing 30 may be formed to be substantially equal to each other.

In an embodiment, the first part 61 may at least partially form the first surface 10A of the first housing 10. For example, the first surface 10A of the first housing 10 may be at least partially formed by a surface of the first part 61. The first surface 10A of the first housing 10 may be a front surface of the first housing 10 exposed to an outside. In an embodiment, in a case in which the first part 61 forms an entirety of the first surface 10A of the first housing 10, the third side part 13 and the fourth side part 14 may not be visible from the front surface of the first housing 10 by being covered by the first part 61. In an embodiment, together with the third side part 13 and/or the fourth side part 14, the first part 61 may form the first surface 10A of the first housing 10.

In an embodiment, the second part 62 may at least partially form a first surface 20A of the second housing 20. For example, the first surface 20A of the second housing 20 may be at least partially formed by a surface of the second part 62. The first surface 20A of the second housing 20 may be a front surface of the second housing 20 exposed to the outside.

In an embodiment, the third part 63 may at least partially form a first surface 30A of the third housing 30. For example, the first surface 30A of the third housing 30 may be at least partially formed by a surface of the third part 63. The first surface 30A of the third housing 30 may be a front surface of the third housing 30 exposed to the outside.

In an embodiment, the first display 60 may be bent as the second housing 20 rotates with respect to the first housing 10. For example, the first display 60 may be bent about the first axis A1. For example, the first display 60 may include a first folding part bent about the first axis A1. For example, the first folding part may be deformed into a plane or a curved surface bent about the first axis A1 as the second housing 20 rotates with respect to the first housing 10. The first folding part may be aligned with the first hinge structure 15 between the first housing 10 and the second housing 20. For example, the first folding part may at least partially overlap the first hinge structure 15. For example, the first folding part may at least partially cover the first hinge structure 15. The first folding part may include a portion of the first part 61 located on the first side part 11 of the first housing 10 and a portion of the second part 62 extending from the portion of the first part 61.

In an embodiment, the first display 60 may be bent as the third housing 30 rotates with respect to the first housing 10. For example, the first display 60 may be bent about the second axis A2. For example, the first display 60 may include a second folding part bent about the second axis A2. For example, the second folding part may be deformed into a plane or a curved surface bent about the second axis A2 as the third housing 30 rotates with respect to the first housing 10. The second folding part may be aligned with the second hinge structure 25 between the first housing 10 and the third housing 30. For example, the second folding part may at least partially overlap the second hinge structure 25. For example, the second folding part may at least partially cover the second hinge structure 25. The second folding part may include another portion of the first part 61 located on the second side part 12 of the first housing 10 and a portion of the third part 63 extending from the another portion of the first part 61.

In an embodiment, parts of the first display 60 excluding the first folding part and the second folding part may be formed to be substantially flat. In an embodiment, the first display 60 may, based on FIG. 2A, at least partially form a front surface of the electronic device 1 or may be visible through the front surface. The front surface of the electronic device 1 may include the first surface 10A of the first housing 10, the first surface 20A of the second housing 20, and the first surface 30A of the third housing 30. In an embodiment, the first display 60 may be referred to as a flexible display or a foldable display.

In an embodiment, the second display 65 may be disposed on the second housing 20. For example, the second display 65 may be at least partially accommodated in a recess provided by the second housing 20. For example, the second display 65 may be disposed in the second housing 20 so as to be opposite to the second part 62 of the first display 60. For example, the second display 65 may at least partially form a second surface 20B opposite to the first surface 20A of the second housing 20 formed by the second part 62. The second surface 20B of the second housing 20 may be a rear surface of the second housing 20 exposed to the outside. The rear surface of the second housing 20 may be at least partially formed by a surface of the second display 65. The second display 65 and the third display 67 may be visible from the outside regardless of a folded state of the electronic device 1.

In an embodiment, the third display 67 may be disposed on the third housing 30. For example, the third display 67 may be at least partially accommodated in a recess provided by the third housing 30. For example, the third display 67 may be disposed in the third housing 30 so as to be opposite to the third part 63 of the first display 60. For example, the third display 67 may at least partially form a second surface 30B opposite to the first surface 30A of the third housing 30 formed by the third part 63. The second surface 30B of the third housing 30 may be a rear surface of the third housing 30 exposed to the outside. The rear surface of the third housing 30 may be at least partially formed by a surface of the third display 67.

In an embodiment, the second surface (or a rear surface) 10B of the first housing 10, the second display 65, and the third display 67 may, based on FIG. 2A, at least partially form a rear surface of the electronic device 1 exposed to the outside. Although not illustrated, additionally or optionally, the electronic device 1 may include a fourth display at least partially forming the second surface 10B of the first housing 10.

In an embodiment, each of the first housing 10, the second housing 20, and the third housing 30 may include conductive portions and non-conductive portions. The conductive portions may include, for example, an electrically conductive metal. As a non-limiting example, the conductive portions may include at least one of stainless steel, aluminum, titanium, and/or an alloy thereof. The non-conductive portions may include, for example, a material having electrical non-conductivity, an insulating material, or a dielectric material. As a non-limiting example, the non-conductive portions may include plastic and/or air.

In an embodiment, the conductive portions of the first housing 10 may include a first conductive portion 131, a second conductive portion 133, and a third conductive portion 135 of the third side part 13. In addition, the non-conductive portions of the first housing 10 may include a first non-conductive portion 132 and a second non-conductive portion 134 of the third side part 13. In an embodiment, each of the first conductive portion 131, the second conductive portion 133, the third conductive portion 135, the first non-conductive portion 132, and the second non-conductive portion 134 may extend in the width direction (e.g., the x-axis direction) of the first housing 10.

In an embodiment, the first conductive portion 131 may include a first end portion 131a facing the second conductive portion 133 and a second end portion 131b facing the third conductive portion 135. For example, the first conductive portion 131 may be located between the first non-conductive portion 132 and the second non-conductive portion 134.

In an embodiment, the first non-conductive portion 132 may be disposed between the first conductive portion 131 and the second conductive portion 133. The first non-conductive portion 132 may be in contact with the first end portion 131a of the first conductive portion 131. The first non-conductive portion 132 may extend from the first end portion 131a of the first conductive portion 131 to the second conductive portion 133.

In an embodiment, the second conductive portion 133 may be spaced apart from the first conductive portion 131. The second conductive portion 133 may extend from the first non-conductive portion 132 toward the second housing 20. As a non-limiting example, based on the illustration of FIG. 2A, the second conductive portion 133 may extend from the first non-conductive portion 132 to the second housing 20. As a non-limiting example, based on the illustration of FIG. 2A, the second conductive portion 133 may extend from the first non-conductive portion 132 toward the first hinge structure 15. As a non-limiting example, based on the illustration of FIG. 2A, the second conductive portion 133 may extend between the first non-conductive portion 132 and the first hinge structure 15.

In an embodiment, the second non-conductive portion 134 may be disposed between the first conductive portion 131 and the third conductive portion 135. The second non-conductive portion 134 may be in contact with the second end portion 131b of the first conductive portion 131. The second non-conductive portion 134 may extend from the second end portion 131b of the first conductive portion 131 to the third conductive portion 135.

In an embodiment, the third conductive portion 135 may be spaced apart from the first conductive portion 131. The third conductive portion 135 may extend from the second non-conductive portion 134 toward the second housing 20. As a non-limiting example, based on the illustration of FIG. 2A, the third conductive portion 135 may extend from the second non-conductive portion 134 to the third housing 30. As a non-limiting example, based on the illustration of FIG. 2A, the third conductive portion 135 may extend from the second non-conductive portion 134 to the second hinge structure 25. As a non-limiting example, based on the illustration of FIG. 2A, the third conductive portion 135 may extend from the second non-conductive portion 134 toward the second hinge structure 25. As a non-limiting example, based on the illustration of FIG. 2A, the third conductive portion 135 may extend between the second non-conductive portion 134 and the second hinge structure 25.

In an embodiment, the conductive portions of the second housing 20 may include a first conductive portion 201 and a second conductive portion 203, and the non-conductive portions of the second housing 20 may include a first non-conductive portion 202. Each of the first conductive portion 201 and the first non-conductive portion 202 may extend along a width direction of the second housing 20. For example, based on the illustration of FIG. 2A, the first conductive portion 201 and the first non-conductive portion 202 may extend in a direction (e.g., the x-axis direction) parallel to the third side part 13.

In an embodiment, the first conductive portion 201 may extend from the first non-conductive portion 202 toward the first housing 10. For example, based on the illustration of FIG. 2A, the first conductive portion 201 may extend from the first non-conductive portion 202 to the third side part 13 or the second conductive portion 133 of the first housing 10. In an embodiment, the first non-conductive portion 202 may be disposed between the first conductive portion 201 and the second conductive portion 203. For example, the first non-conductive portion 202 may extend from the first conductive portion 201 to the second conductive portion 203. In an embodiment, the second conductive portion 203 may be spaced apart from the first conductive portion 201. For example, the second conductive portion 203 may include a first portion in contact with the first non-conductive portion 202 and extending in a direction away from the first conductive portion 201, and a second portion extending perpendicular to the first portion. For example, the second conductive portion 203 may form a corner of the second housing 20.

In an embodiment, the conductive portions of the third housing 30 may include a first conductive portion 301 and a second conductive portion 303, and the non-conductive portions of the third housing 30 may include a first non-conductive portion 302. Each of the first conductive portion 301 and the first non-conductive portion 302 may extend along a width direction of the third housing 30. For example, based on the illustration of FIG. 2A, the first conductive portion 301 and the first non-conductive portion 302 may extend in a direction (e.g., the x-axis direction) parallel to the third side part 13.

In an embodiment, the first conductive portion 301 may extend from the first non-conductive portion 302 toward the first housing 10. For example, based on the illustration of FIG. 2A, the first conductive portion 301 may extend from the first non-conductive portion 302 to the third side part 13 or the third conductive portion 135 of the first housing 10. In an embodiment, the first non-conductive portion 302 may be disposed between the first conductive portion 301 and the second conductive portion 303. For example, the first non-conductive portion 302 may extend from the first conductive portion 301 to the second conductive portion 303. In an embodiment, the second conductive portion 303 may be spaced apart from the first conductive portion 301. For example, the second conductive portion 303 may include a first portion in contact with the first non-conductive portion 302 and extending in a direction away from the first conductive portion 301, and a second portion extending perpendicular to the first portion. For example, the second conductive portion 303 may form a corner of the third housing 30.

Hereinafter, a state of the electronic device 1 and an operation of a housing according to the state will be described with reference to FIG. 2A, FIG. 2B, FIG. 2C, and FIG. 2D. The electronic device 1 according to an embodiment may include an unfolded state (e.g., FIG. 2A), a first folded state (e.g., FIG. 2B), a second folded state (e.g., FIG. 2C), and a third folded state (e.g., FIG. 2D).

Referring to FIG. 2A, in the unfolded state of the electronic device 1, the first housing 10, the second housing 20, and the third housing 30 may form an angle of about 180 degrees. The first housing 10, the second housing 20, and the third housing 30 may be located to face the same direction (e.g., a +z direction). For example, the first surface 10A of the first housing 10, the first surface 20A of the second housing 20, and the first surface 30A of the third housing 30 may face the same direction (e.g., the +z direction). The surface of the first part 61 of the first display 60, the surface of a second part 62, and the surface of a third part 63 may form an angle of about 180 degrees with each other and may face the same direction (e.g., the +z direction). The surface of the first part 61 of the first display 60, the surface of the second part 62, and the surface of the third part 63 may form one substantially flat surface. In the unfolded state, the first folding part and the second folding part of the first display 60 may be maintained substantially flat. The second display 65, the third display 67, and the second surface 10B of the first housing 10 may face the same direction (e.g., a -z direction).

Referring to FIG. 2B, in the first folded state (or a fully folded state) of the electronic device 1, each of the second housing 20 and the third housing 30 may overlap the first housing 10. For example, in the first folded state, each of the second housing 20 and the third housing 30 may overlap on the first surface 10A of the first housing 10. For example, each of the second housing 20 and the third housing 30 may overlap the first housing 10 based on a direction (e.g., a z-axis direction) perpendicular to the first housing 10. Herein, "overlap" only means that, when projected from a specific point of view, at least a portion of a certain component is located within a boundary of another component, and unless otherwise specified, it is not interpreted that they are physically in contact with each other or spaced apart from each other. For example, "the second housing 20 overlaps the first housing 10" means that, when viewed from a specific point of view, at least a portion of the second housing 20 is located within the boundary of the first housing 10, and in this case, the first housing 10 and the second housing 20 may be physically spaced apart from each other or may be in contact with each other.

In an embodiment, in the first folded state of the electronic device 1, the second housing 20 and the first housing 10 may face each other. For example, the first surface 20A of the second housing 20 may face the first surface 10A of the first housing 10. For example, a direction (e.g., the -z direction) in which the first surface 20A of the second housing 20 faces may be opposite to a direction (e.g., the +z direction) in which the first surface 10A of the first housing 10 faces. In the first folded state, the third housing 30 and the first housing 10 may face each other. For example, the first surface 30A of the third housing 30 may face the first surface 10A of the first housing 10. For example, a direction (e.g., the -z direction) in which the first surface 30A of the third housing 30 faces may be opposite to the direction (e.g., the +z direction) in which the first surface 10A of the first housing 10 faces. In an embodiment, in the first folded state, each of the second housing 20 and the third housing 30 may be parallel to the first housing 10, but is not limited thereto. For example, each of the first surface 20A of the second housing 20 and the first surface 30A of the third housing 30 may be parallel to the first surface 10A of the first housing 10, but is not limited thereto.

In an embodiment, in the first folded state of the electronic device 1, the first conductive portion 201, the second conductive portion 203, and the first non-conductive portion 202 of the second housing 20 may be aligned with the third side part 13 of the first housing 10. For example, the first conductive portion 201, the second conductive portion 203, and the first non-conductive portion 202 may face the third side part 13. For example, the first conductive portion 201, the second conductive portion 203, and the first non-conductive portion 202 may overlap the third side part 13 based on the thickness direction (e.g., the z-axis direction) of the first housing 10. As a non-limiting example, the first conductive portion 201 and the first non-conductive portion 202 may be at least partially in contact with the third side part 13.

In an embodiment, in the first folded state of the electronic device 1, the first conductive portion 201 of the second housing 20 may be aligned with the second conductive portion 133 of the third side part 13. For example, the first conductive portion 201 may at least partially face the second conductive portion 133.

In an embodiment, in the first folded state of the electronic device 1, the first conductive portion 301 of the third housing 30 may be aligned with the third conductive portion 135 of the third side part 13. For example, the first conductive portion 301 may at least partially face the third conductive portion 135.

In an embodiment, in the first folded state of the electronic device 1, the second conductive portion 203 of the second housing 20 may be aligned with the first conductive portion 131 of the third side part 13, and the second conductive portion 303 of the third housing 30 may be aligned with the first conductive portion 131 of the third side part 13. For example, a first portion 1311 of the first conductive portion 131 may face the second conductive portion 203, and a second portion 1312 different from the first portion 1311 of the first conductive portion 131 may face the second conductive portion 303. For example, in the first folded state, a third portion 1313 between the first portion 1311 and the second portion 1312 of the first conductive portion 131 may be aligned with a slot 50.

In an embodiment, in the first folded state of the electronic device 1, the first non-conductive portion 202 of the second housing 20 may be at least partially aligned with the first non-conductive portion 132 of the third side part 13 based on the thickness direction (e.g., the z-axis direction) of the first housing 10, but is not limited thereto. For example, the first non-conductive portion 202 may be aligned with the first conductive portion 131 or the second conductive portion 133 of the first housing 10. For another example, the second housing 20 may not include the first non-conductive portion 202. In this case, the first non-conductive portion 202, the first conductive portion 201, and the second conductive portion 203 of the second housing 20 may be integrally formed of a conductive material.

In an embodiment, in the first folded state of the electronic device 1, the first non-conductive portion 302 of the third housing 30 may be at least partially aligned with the second non-conductive portion 134 of the third side part 13 based on the thickness direction (e.g., the z-axis direction) of the first housing 10, but is not limited thereto. For example, the first non-conductive portion 302 may be aligned with the first conductive portion 131 or the third conductive portion 135 of the first housing 10. For another example, the third housing 30 may not include the first non-conductive portion 302. In this case, the first non-conductive portion 302, the first conductive portion 301, and the second conductive portion 303 of the third housing 30 may be integrally formed of a conductive material.

In an embodiment, in the first folded state of the electronic device 1, the first part 61 and the second part 62 of the first display 60 may at least partially face each other. In an embodiment, the first part 61 and the third part 63 of the first display 60 may at least partially face each other. The first folding part and the second folding part of the first display 60 may be formed as a curved surface.

In an embodiment, in the first folded state of the electronic device 1, the first part 61 of the first display 60, the second display 65, and the third display 67 may face the same direction (e.g., the +z direction). In addition, in the first folded state of the electronic device 1, a direction (e.g., the +z direction) in which the second display 65 and the third display 67 face may be opposite to a direction (e.g., the -z direction) in which the second surface 10B of the first housing 10 faces.

In an embodiment, in the first folded state of the electronic device 1, the slot 50 (or a gap) between the second housing 20 and the third housing 30 may be formed. The slot 50 may be defined as a space in which the second housing 20 and the third housing 30 are spaced apart from each other in the first folded state. In an embodiment, in the first folded state of the electronic device 1, a portion of the first housing 10 (or the first part 61) may be covered by the second housing 20 and the third housing 30, and another portion of the first housing 10 (or the first part 61) may be visible through the slot 50. The slot 50 may be aligned with the first conductive portion 131 of the third side part 13. For example, the slot 50 may overlap the first conductive portion 131 based on the thickness direction (e.g., the z-axis direction) of the first housing 10. The slot 50 may extend in the length direction (e.g., the y-axis direction) of the first housing 10. In an embodiment, a non-conductive material may be at least partially filled in the slot 50. For example, the non-conductive material may be located in the second housing 20 and/or the third housing 30.

Referring to FIG. 2C, the second folded state of the electronic device 1 may be a state in which the second housing 20 is unfolded with respect to the first housing 10 and the third housing 30 is folded with respect to the first housing 10.

The description regarding the first housing 10 and the second housing 20 in the unfolded state of FIG. 2A may be substantially equally applied to a description regarding the first housing 10 and the second housing 20 in the second folded state of FIG. 2C. For example, the first housing 10 and the second housing 20 may be located to face the same direction (e.g., the +z direction). For example, the surface of the first part 61 and the surface of the second part 62 of the first display 60 may face the same direction (e.g., the +z direction). For example, the first folding part of the first display 60 may be maintained substantially flat. For example, the second surface 10B of the first housing 10 and the surface of the second display 65 may face the same direction (e.g., the -z direction).

The description regarding the first housing 10 and the third housing 30 in the first folded state of FIG. 2B may be substantially equally applied to a description regarding the first housing 10 and the third housing 30 in the second folded state of FIG. 2C. For example, the third housing 30 may overlap the first housing 10 so as to face the first housing 10. For example, the first part 61 and the third part 63 of the first display 60 may at least partially face each other. For example, the second folding part of the first display 60 may be formed as a curved surface. For example, the first part 61 of the first display 60 and the third display 67 may face the same direction (e.g., the +z direction). For example, a direction (e.g., the +z direction) in which the third display 67 faces may be opposite to the direction (e.g., the -z direction) in which the second surface 10B of the first housing 10 faces. For example, the first conductive portion 301 of the third housing 30 may be aligned with the third conductive portion 135 of the third side part 13. For example, the second conductive portion 303 of the third housing 30 may be aligned with the first conductive portion 131 of the third side part 13. As a non-limiting example, the first non-conductive portion 302 of the third housing 30 may be aligned with the second non-conductive portion 134 of the third side part 13.

Referring to FIG. 2D, the third folded state of the electronic device 1 may be a state in which the second housing 20 is folded with respect to the first housing 10 and the third housing 30 is unfolded with respect to the first housing 10.

The description regarding the first housing 10 and the second housing 20 in the first folded state of FIG. 2B may be substantially equally applied to a description regarding the first housing 10 and the second housing 20 in the third folded state of FIG. 2D. For example, the second housing 20 may overlap the first housing 10 so as to face the first housing 10. For example, the first part 61 and the second part 62 of the first display 60 may at least partially face each other. For example, the first folding part of the first display 60 may be formed as a curved surface. For example, the first part 61 of the first display 60 and the second display 65 may face the same direction (e.g., the +z direction). For example, a direction (e.g., the +z direction) in which the second display 65 faces may be opposite to the direction (e.g., the -z direction) in which the second surface 10B of the first housing 10 faces. For example, the first conductive portion 201 of the second housing 20 may be aligned with the second conductive portion 133 of the third side part 13. For example, the second conductive portion 203 of the second housing 20 may be aligned with the first conductive portion 131 of the third side part 13. As a non-limiting example, the first non-conductive portion 202 of the second housing 20 may be aligned with the first non-conductive portion 132 of the third side part 13.

The description regarding the first housing 10 and the third housing 30 in the unfolded state of FIG. 2A may be substantially equally applied to a description regarding the first housing 10 and the third housing 30 in the third folded state of FIG. 2D. For example, the first housing 10 and the third housing 30 may be located to face the same direction (e.g., the +z direction). For example, the surface of the first part 61 and the surface of the third part 63 of the first display 60 may face the same direction (e.g., the +z direction). For example, the second folding part of the first display 60 may be maintained substantially flat. For example, the second surface 10B of the first housing 10 and the surface of the third display 67 may face the same direction (e.g., the -z direction).

Although an in-folding scheme in which the second housing 20 and the third housing 30 are folded to overlap on the first surface 10A of the first housing 10 has been described with reference to FIG. 2A, FIG. 2B, FIG. 2C, and FIG. 2D, it is not limited thereto. For example, the electronic device 1 may be implemented in an out-folding scheme in which the second housing 20 and the third housing 30 are folded to overlap on the second surface 10B of the first housing 10. For example, the electronic device 1 may be implemented in an in-and-out folding scheme in which the second housing 20 and the third housing 30 are folded to overlap on the first surface 10A or the second surface 10B of the first housing 10.

In FIG. 2A, FIG. 2B, FIG. 2C, and FIG. 2D, although a length of the first housing 10 is illustrated as being greater than a width, it is not limited thereto. For example, unlike the illustration, a width of the first housing 10 may be formed to be greater than the length.

Although, with reference to FIG. 2A, FIG. 2B, FIG. 2C, and FIG. 2D, each of the second housing 20 and the third housing 30 has been described as rotating about folding axes (e.g., the first axis A1 and the second axis A2) parallel to a length direction (e.g., the y-axis direction) of the electronic device 1, it is not limited thereto. For example, each of the second housing 20 and the third housing 30 may rotate about folding axes parallel to a width direction (e.g., the x-axis direction) of the electronic device 1.

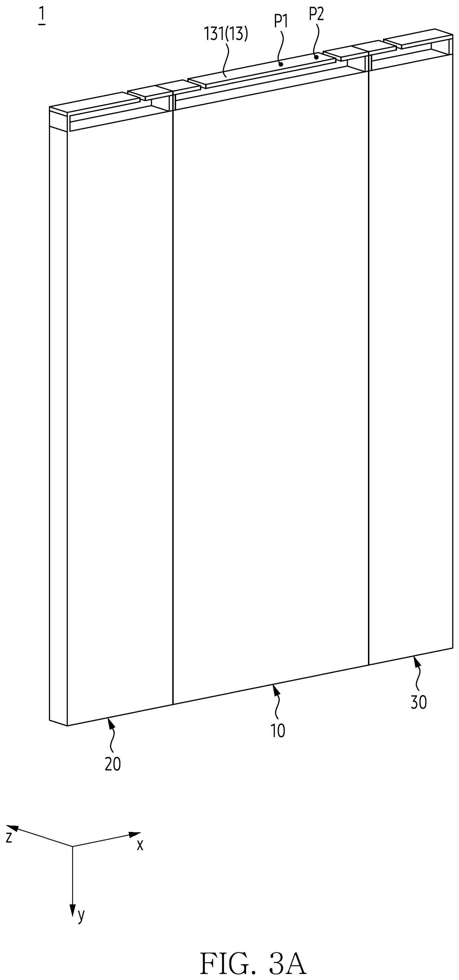

FIG. 3A is a view exemplarily illustrating an electronic device in an unfolded state according to an embodiment. Hereinafter, a redundant description regarding a configuration having the same reference numeral as those of the above-described configuration may be omitted.

Referring to FIG. 3A, in an embodiment, a first conductive portion 131 of a first housing 10 may include a first point P1. Additionally or optionally, the first conductive portion 131 may include a second point P2 spaced apart from the first point P1. In an embodiment, the first conductive portion 131 of the first housing 10 may be used as an antenna for radiating a radio wave. For example, the first conductive portion 131 may be electrically connected to wireless communication circuitry (e.g., the wireless communication module 2092 of FIG. 1) of an electronic device 1 at the first point P1. The first conductive portion 131 may be electrically connected to a ground of the antenna at the second point P2. As a non-limiting example, the ground of the antenna may be provided by a ground region of a printed circuit board in the electronic device 1 and/or a conductive member of the electronic device 1 distinguished from the first conductive portion 131. The wireless communication circuitry may transmit an RF signal to an outside by feeding to the first point of the first conductive portion 131. In addition, the wireless communication circuitry may receive the RF signal from the outside by using the first conductive portion 131.

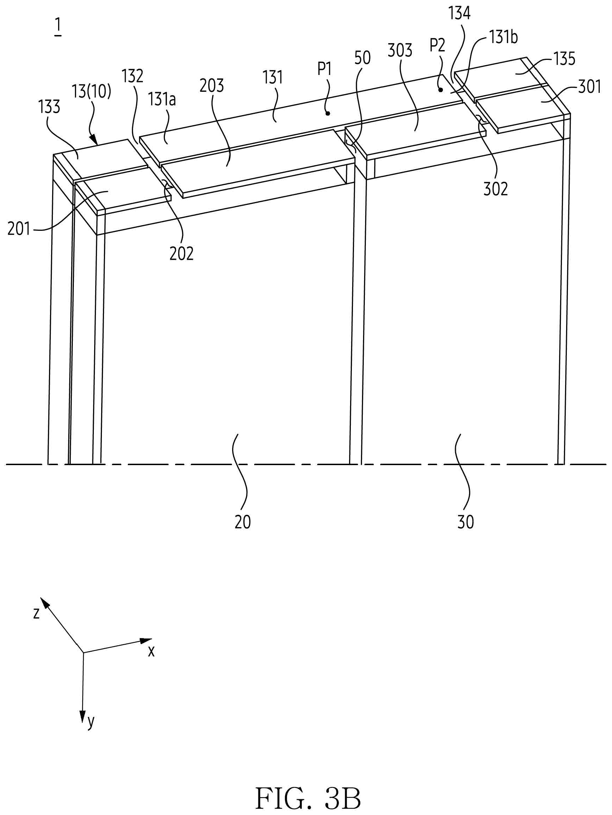

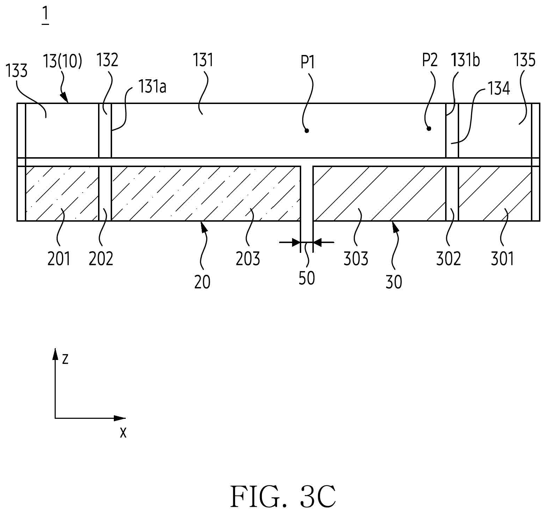

FIG. 3B and FIG. 3C are views exemplarily illustrating an electronic device in a first folded state (e.g., FIG. 2B) according to an embodiment. Referring to FIG. 3B and FIG. 3C, in an embodiment, the first point P1 of the first conductive portion 131 may be located between a first end portion 131a and the second point P2. In an embodiment, the first point P1 may be located closer to a second non-conductive portion 134 than a first non-conductive portion 132. For example, based on a width direction (e.g., an x-axis direction) of the first housing 10, a first distance from the first point P1 to the first non-conductive portion 132 may be greater than a second distance from the first point P1 to the second non-conductive portion 134. However, it is not limited thereto, and the first distance and the second distance may be substantially equal to each other, or the first distance may be smaller than the second distance. For example, a location of the first point P1 may be determined based on a frequency band of an antenna including the first conductive portion 131, a location of a non-conductive portion formed in a second housing 20 or a third housing 30, or a location of a slot 50 formed by the second housing 20 and the third housing 30.

In an embodiment, the second point P2 of the first conductive portion 131 may be located closer to the second non-conductive portion 134 than the first non-conductive portion 132. For example, the second point P2 may be located at a second end portion 131b of the first conductive portion 131 in contact with the second non-conductive portion 134. For example, a location of the second point P2 may be determined based on a frequency band of the antenna including the first conductive portion 131.

In an embodiment, in the first folded state of the electronic device 1, the first point P1 of the first conductive portion 131 may be aligned with the slot 50. For example, the first point P1 of the first conductive portion 131 may overlap the slot 50 in a z-axis direction.

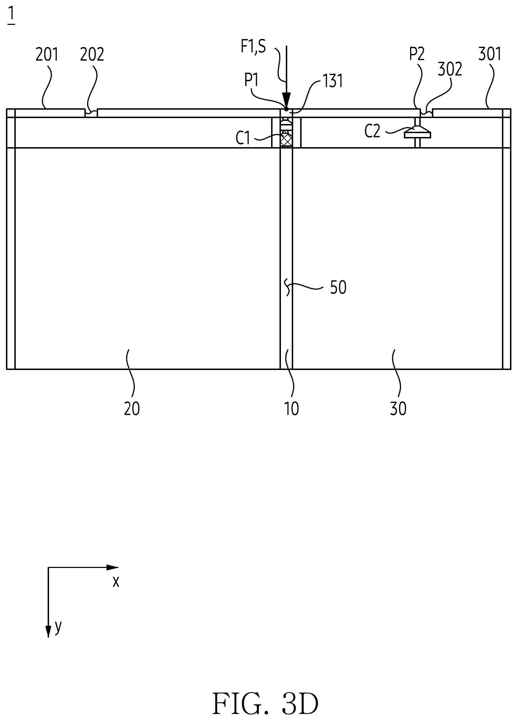

FIG. 3D is a view exemplarily illustrating an electronic device in a first folded state (e.g., FIG. 2B) according to an embodiment. In FIG. 3D and the following drawings, an arrow F1 indicating a location of a feeding point and an arrow S indicating a location of the slot 50 are illustrated. In the first folded state of FIG. 3D, since the first point P1 and the slot 50 are aligned, the arrow F1 and the arrow S are illustrated as one arrow.

Referring to FIG. 3D together with FIG. 3C, in an embodiment, the first conductive portion 131 of the electronic device 1 may be used as an antenna radiator. For example, the first conductive portion 131 may be connected to a transmission line (or a feeding line) C1 at the first point P1 and connected to a shorting pin C2 at the second point P2, thereby operating as a radiator of an inverted-F antenna (IFA) type or a planar inverted-F antenna (PIFA) type antenna. The transmission line C1 and/or the shorting pin C2 may include, as a non-limiting example, an electrical path provided by a printed circuit board, such as conductive traces or conductive vias, and a contact member, such as a pogo pin or a C-clip, electrically connecting the electrical path of the printed circuit board to the first conductive portion 131. As a non-limiting example, the transmission line C1 may include a connection member (e.g., a coaxial cable) in a cable form or a connection member (e.g., a flexible printed circuit board RF cable (FRC)) in flexible circuitry form. Additionally or optionally, the transmission line C1 and/or the shorting pin C2 may include a matching stage (or matching circuitry) for impedance matching between a source and a load. Additionally or optionally, in order for the contact member of the transmission line C1 and/or the shorting pin C2 to be easily connected, the first conductive portion 131 may include protrusions formed at the first point P1 and/or the second point P2. The protrusions may allow contact of the contact member in a vertical direction (e.g., the z-axis direction) of the protrusions by extending inward of the first housing 10. Although the first conductive portion 131 has been described as configuring a radiator of the IFA type or the PIFA type antenna, it is not limited thereto.

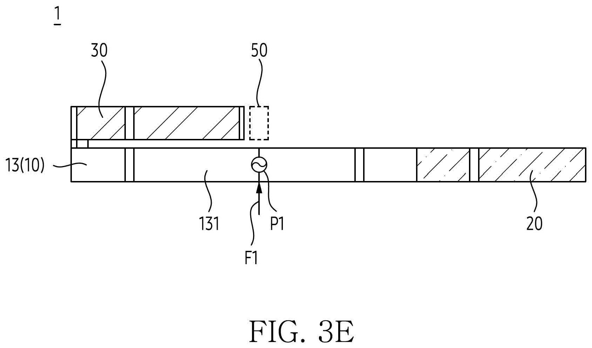

FIG. 3E is a view exemplarily illustrating an electronic device in a second folded state (e.g., FIG. 2C) according to an embodiment. Referring to FIG. 3E, in the second folded state, even when the third housing 30 is folded to overlap on the first housing 10, the first point P1 at which feeding is performed may not overlap a conductive portion included in the third housing 30.

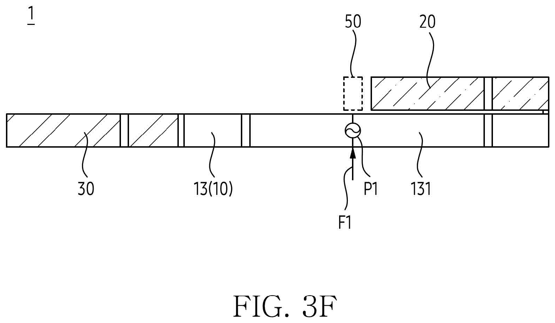

FIG. 3F is a view exemplarily illustrating an electronic device in a third folded state (e.g., FIG. 2D) according to an embodiment. Referring to FIG. 3F, in the third folded state, even when the second housing 20 is folded to overlap on the first housing 10, the first point P1 at which feeding is performed may not be covered by the second housing 20.

FIG. 4 is a view exemplarily illustrating an electronic device in a first folded state (e.g., FIG. 2B) according to an embodiment. Referring to FIG. 4, in an embodiment, a second housing 20 may be formed with a first width w1, and the third housing 30 may be formed with a second width w2. Unlike the second housing 20 and the third housing 30 of FIG. 2A, the first width w1 and the second width w2 may be formed to be substantially equal to each other.

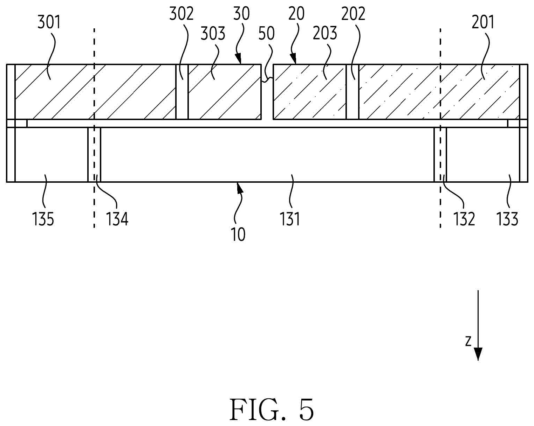

FIG. 5 is a view exemplarily illustrating an electronic device in a first folded state (e.g., FIG. 2B) according to an embodiment. Referring to FIG. 5, in an embodiment, in the first folded state, a first non-conductive portion 202 of a second housing 20 may not be aligned with a first non-conductive portion 132 of a first housing 10. In this case, the first non-conductive portion 202 may be aligned with a first conductive portion 131 of the first housing 10. In an embodiment, in the first folded state, a first non-conductive portion 302 of a third housing 30 may not be aligned with a second non-conductive portion 134 of the first housing 10. In this case, the first non-conductive portion 302 may be aligned with the first conductive portion 131 of the first housing 10.

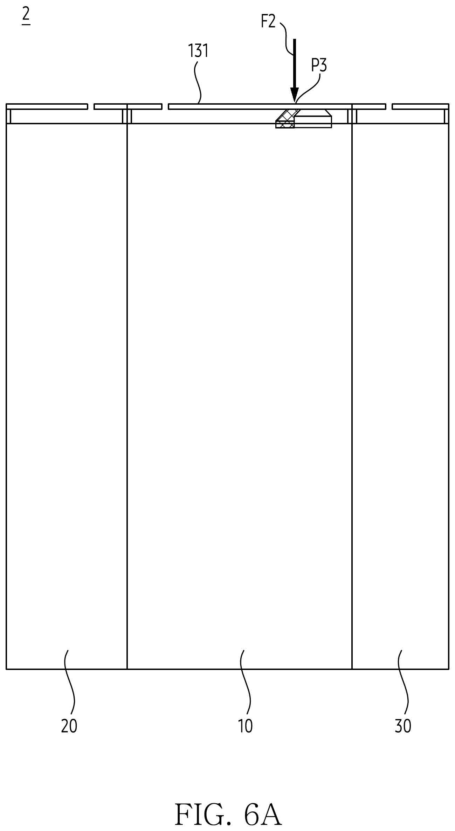

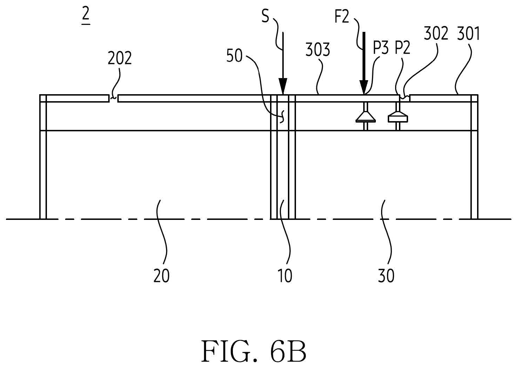

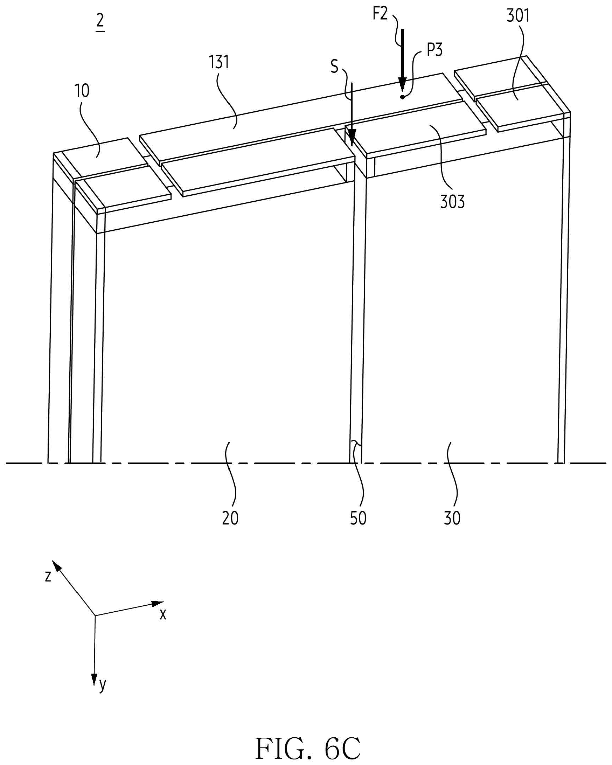

FIG. 6A illustrates an electronic device in an unfolded state according to a comparative example. FIG. 6B and FIG. 6C illustrate an electronic device in a first folded state according to a comparative example. In FIG. 6A, FIG. 6B, and FIG. 6C, an arrow F2 indicating a location of a third point P3 at which feeding is performed is illustrated.

Referring to FIG. 6A, a first conductive portion 131 of an electronic device 2 according to a comparative example may be fed at the third point P3. The third point P3 may be a point at a location different from a first point (e.g., the first point P1 of FIG. 3D).

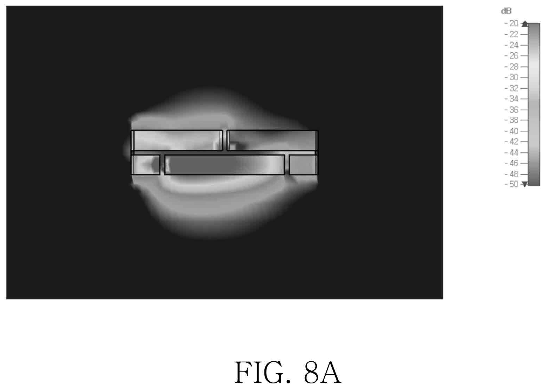

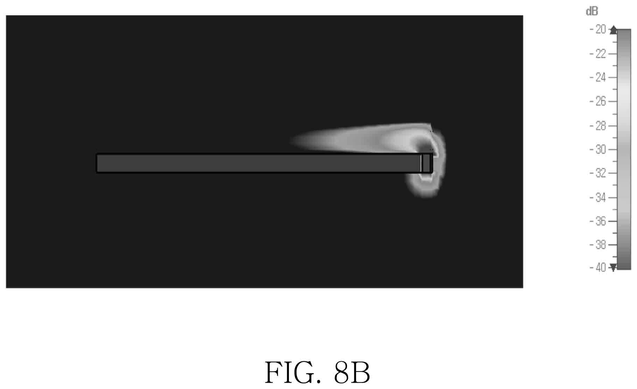

Referring to FIG. 6B and FIG. 6C, arrows F2 and S do not coincide with each other. For example, in the first folded state, the third point P3 of the first conductive portion 131 at which the feeding is performed is not aligned with a slot 50. In this case, the third point P3 of the first conductive portion 131 is covered by a second conductive portion 303 of a third housing 30. Accordingly, as described later with reference to FIG. 8A and FIG. 8B, performance of an antenna using the first conductive portion 131 may be degraded.

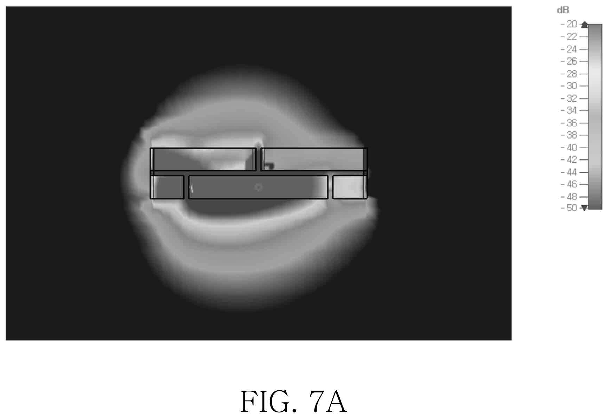

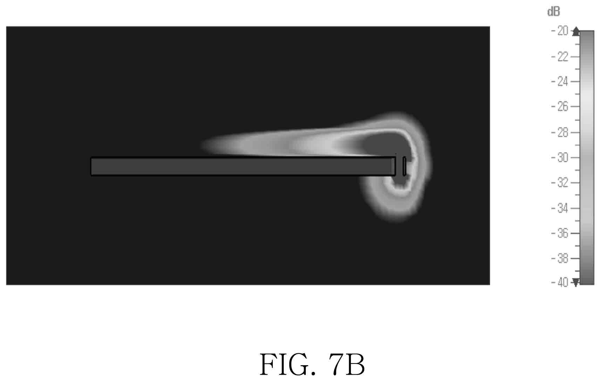

FIG. 7A and FIG. 7B are views illustrating a distribution of an electric field of an electronic device in a first folded state (e.g., FIG. 2B) according to an embodiment. FIG. 7A is a view according to a plane (e.g., the x-z plane of FIG. 3C) perpendicular to a length direction of the electronic device, and FIG. 7B is a view according to a plane (e.g., the y-z plane of FIG. 3B) perpendicular to a width direction of the electronic device.

FIG. 8A and FIG. 8B are views illustrating a distribution of an electric field of an electronic device (e.g., the electronic device 2 of FIG. 6C) in a first folded state according to a comparative example. FIG. 8A is a view according to a plane (e.g., the x-z plane of FIG. 6C) perpendicular to a length direction of the electronic device of the comparative example, and FIG. 8B is a view according to a plane (e.g., the y-z plane of FIG. 6C) perpendicular to a width direction of the electronic device of the comparative example.

When comparing FIG. 7A and FIG. 7B with FIG. 8A and FIG. 8B, in a case of an electronic device 1 according to an embodiment, it may be confirmed that an overall distribution of an electric field is more strongly formed than that of the electronic device 2 of the comparative example, and that a strong electric field is formed particularly along a slot 50. This may be because a feeding point (e.g., the first point P1) of the electronic device 1 according to the embodiment is opened through the slot 50, and the electric field is radiated through the slot 50. In contrast, in the electronic device 2 of the comparative example, the electric field is confined by a conductive portion (e.g., the first conductive portion 301 of the third housing 30) covering a feeding point (e.g., the third point P3), and accordingly efficiency may be degraded.

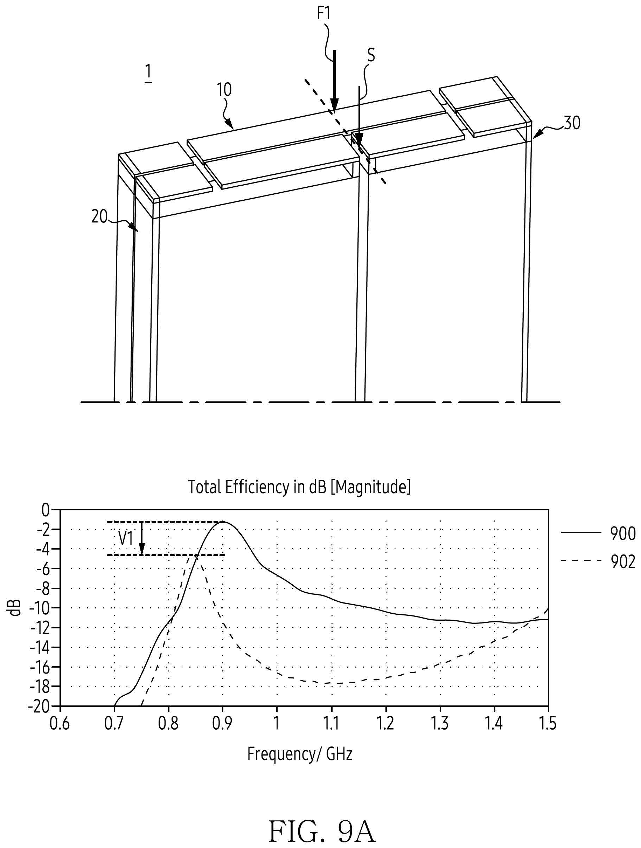

FIG. 9A is a view illustrating total efficiency of an electronic device and an antenna in a first folded state together according to an embodiment. FIG. 9A illustrates total efficiency in a case in which widths of a second housing 20 and a third housing 30 are different from each other. A graph 900 of FIG. 9A illustrates total efficiency of an electronic device 1 in an unfolded state (e.g., FIG. 2A) according to an embodiment, and a graph 902 illustrates total efficiency of the electronic device 1 in the first folded state according to an embodiment. Referring to FIG. 9A, in a case in which the electronic device 1 according to an embodiment is changed from the unfolded state (e.g., the graph 900) to the first folded state (e.g., the graph 902), the total efficiency may be degraded by V1.

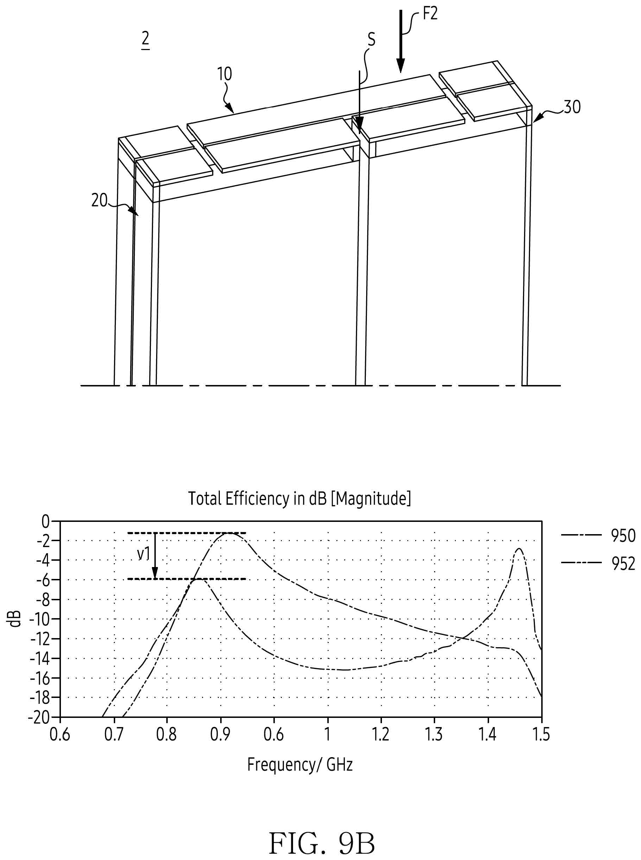

FIG. 9B is a view illustrating total efficiency of an electronic device and an antenna in a first folded state together according to a comparative example. FIG. 9B illustrates total efficiency in a case in which widths of the second housing 20 and the third housing 30 are different from each other. A graph 950 of FIG. 9B illustrates total efficiency of the electronic device 2 in an unfolded state (e.g., FIG. 6A) according to the comparative example, and a graph 952 illustrates total efficiency of the electronic device 2 in the first folded state according to the comparative example. Referring to FIG. 9B, in a case in which the electronic device 2 according to the comparative example is changed from the unfolded state (e.g., the graph 950) to the first folded state (e.g., the graph 952), the total efficiency may be degraded by v1.

When comparing FIG. 9A and FIG. 9B, when changing from the unfolded state to the first folded state, a degree to which performance is degraded may be smaller in the electronic device 1 according to an embodiment than the electronic device 2 of the comparative example. For example, the V1 of FIG. 9A may be about -3.5 dB, and the v1 of FIG. 9B may be about -5.0 dB. When simply compared with only dB values, the performance of the electronic device 1 according to the embodiment may be improved by about 30% compared to that of the electronic device 2 of the comparative example.

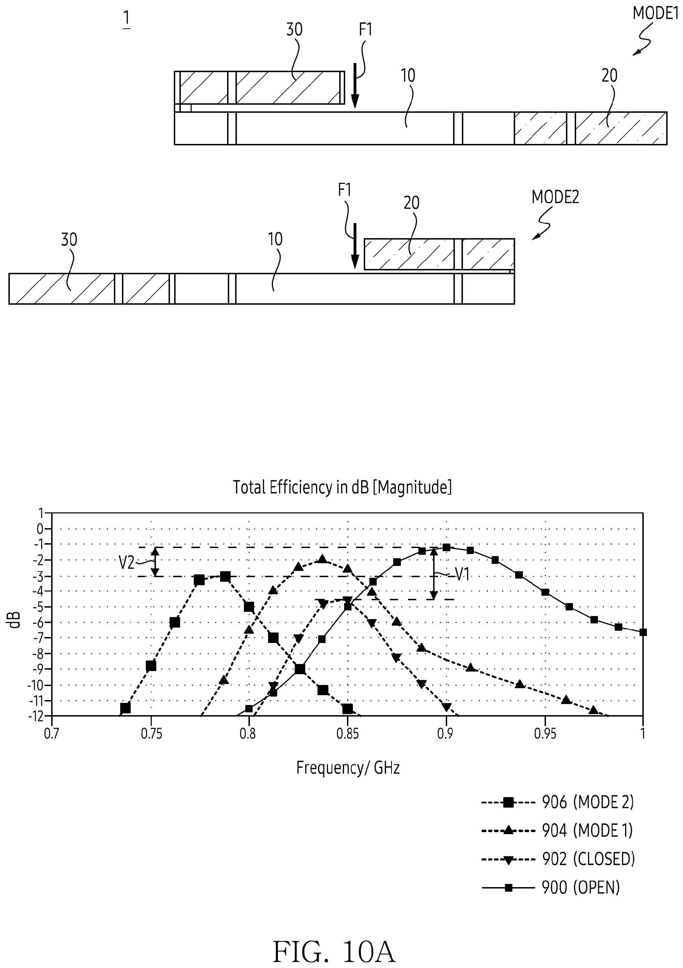

FIG. 10A is a view illustrating total efficiency of an electronic device and an antenna in a second folded state and a third folded state together according to an embodiment. FIG. 10A illustrates total efficiency in a case in which widths of a second housing 20 and a third housing 30 are different from each other. A first mode (MODE 1) of FIG. 10A is an electronic device 1 in the second folded state (e.g., FIG. 2C), and total efficiency of the first mode is indicated as a graph 904. A second mode (MODE 2) is the electronic device 1 in the third folded state (e.g., FIG. 2D), and total efficiency of the second mode is indicated as a graph 906. Referring to FIG. 10A, when the electronic device 1 according to an embodiment is changed from the unfolded state (e.g., the graph 900) to the second mode (e.g., the graph 906), the total efficiency may be degradedby V2. In addition, when the electronic device 1 according to the embodiment is changed from the unfolded state (e.g., the graph 900) to the first mode (e.g., the graph 904), a degree to which the total efficiency is degraded may be smaller than V2.

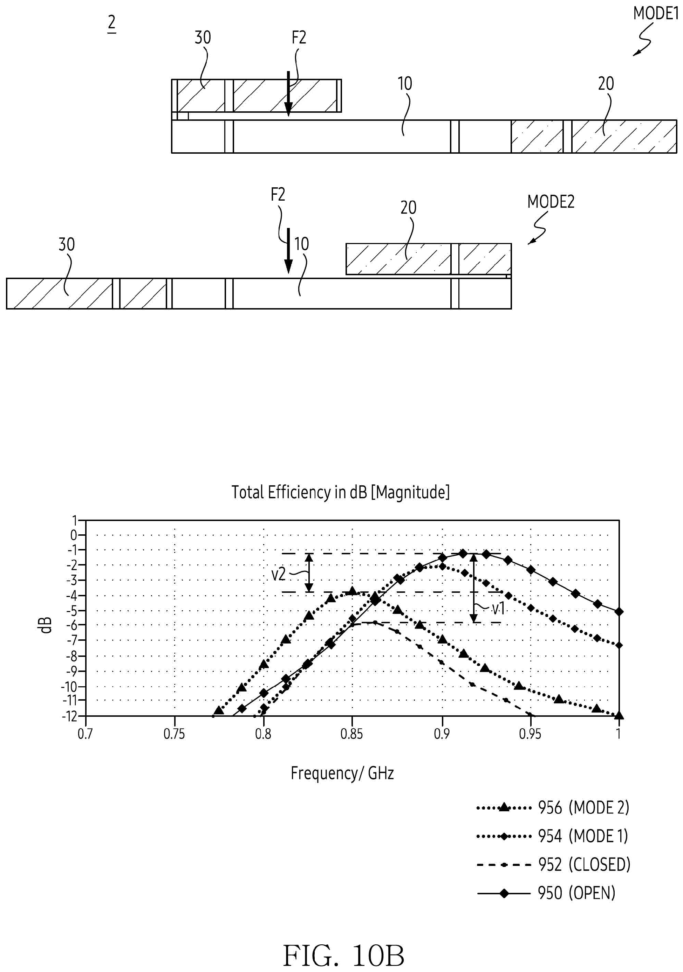

FIG. 10B is a view illustrating total efficiency of an electronic device and an antenna in a second folded state and a third folded state together according to a comparative example. FIG. 10B illustrates total efficiency in a case in which widths of the second housing 20 and the third housing 30 are different from each other. A first mode (MODE 1) of FIG. 10B is an electronic device 2 in the second folded state, and total efficiency of the first mode is indicated as a graph 954. A second mode (MODE 2) is the electronic device 2 in the third folded state, and total efficiency of the second mode is indicated as a graph 956. Referring to FIG. 10B, when the electronic device 2 according to the comparative example is changed from the unfolded state (e.g., the graph 950) to the second mode (e.g., the graph 956), the total efficiency may be degraded by v2. In addition, when the electronic device 2 according to the comparative example is changed from the unfolded state (e.g., the graph 950) to the first mode (e.g., the graph 954), a degree to which the total efficiency is degraded may be smaller than v2.

When comparing FIG. 10A and FIG. 10B, when changing from the unfolded state to the second mode (e.g., the third folded state), a degree to which performance is degraded may be smaller in the electronic device 1 according to an embodiment than the electronic device 2 of the comparative example. For example, the V2 of FIG. 10A may be about -2.0 dB, and the v2 of FIG. 10B may be about -3.0 dB.

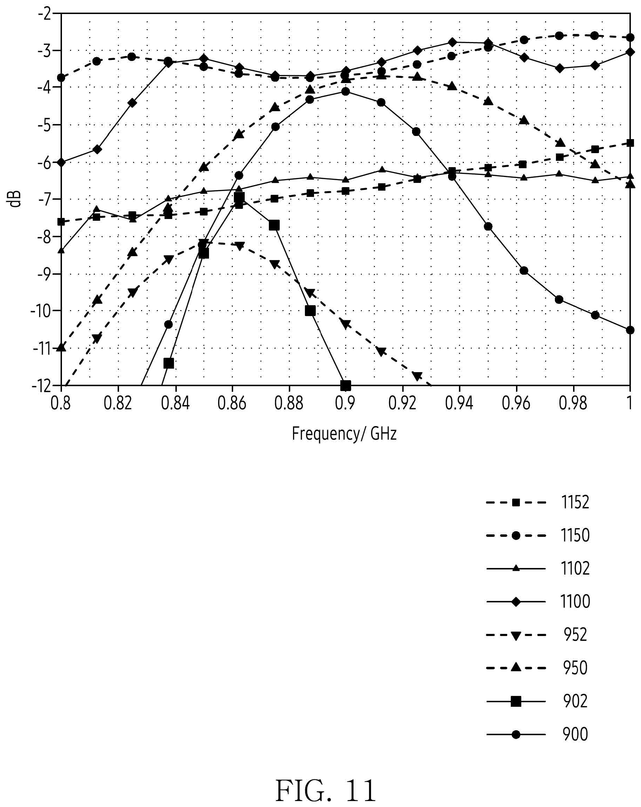

FIG. 11 is a graph illustrating total efficiency and radiation efficiency. A graph 1100 of FIG. 11 is radiation efficiency of an electronic device 1 in an unfolded state according to an embodiment. A graph 1102 is radiation efficiency of the electronic device 1 in a first folded state according to an embodiment. A graph 1150 is radiation efficiency of an electronic device 2 in an unfolded state according to a comparative example. A graph 1152 is radiation efficiency of the electronic device 2 in a first folded state according to the comparative example.

Referring to FIG. 11, a difference between the radiation efficiency of the electronic device 1 according to an embodiment and the radiation efficiency of the electronic device 2 according to the comparative example may not be large. For example, a difference between radiation efficiency of a graph 1000 of the electronic device 1 according to the embodiment and radiation efficiency of a graph 1050 of the electronic device 2 of the comparative example may be about 1.0 dB or less. For example, a difference between radiation efficiency of a graph 1002 of the electronic device 1 according to the embodiment and radiation efficiency of a graph 1052 of the electronic device 2 of the comparative example may be about 1.0 dB or less. However, even when having similar radiation efficiency, the electronic device 1 according to the embodiment may have a smaller amount of change in matching characteristics according to a state change than the electronic device 2 of the comparative example. An operating environment of an antenna of the electronic device 1 that is changed into various folded states may also be variously changed, and it may be difficult to apply a matching network for maintaining matching characteristics according to such changes in the operating environment of the antenna. In this respect, the electronic device 1 having a smaller amount of change in matching characteristics according to a state change may be more advantageous than the electronic device 2 of the comparative example.

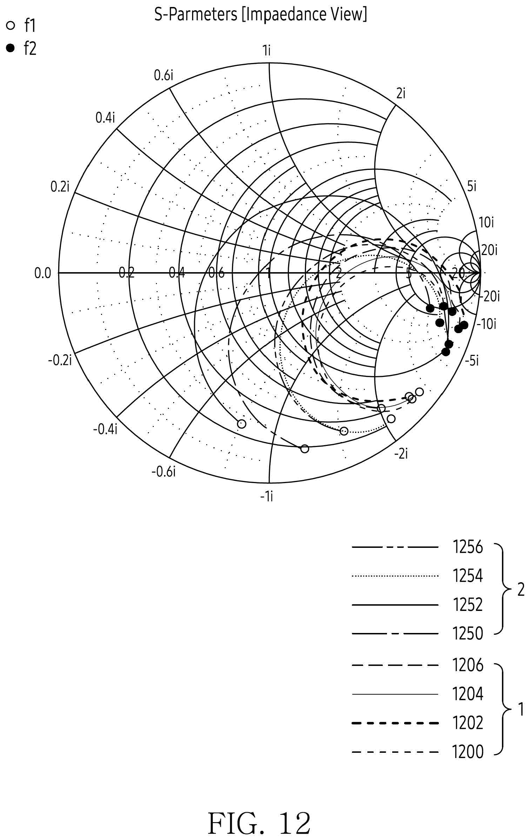

FIG. 12 is a Smith chart illustrating impedance according to a state of an electronic device. FIG. 12 illustrates impedance from a first frequency f1 to a second frequency f2. The first frequency f1 may be 0.82 GHz, and the second frequency f2 may be 0.96 GHz. A graph 1200 of FIG. 12 indicates a change in impedance of an electronic device 1 in an unfolded state according to an embodiment. A graph 1202 indicates a change in impedance of the electronic device 1 in a first folded state according to an embodiment. A graph 1204 indicates a change in impedance of the electronic device 1 in a second folded state according to an embodiment. A graph 1206 indicates a change in impedance of the electronic device 1 in a third folded state according to an embodiment. A graph 1250 indicates a change in impedance of an electronic device 2 in an unfolded state according to a comparative example. A graph 1252 indicates a change in impedance of the electronic device 2 in a first folded state according to an embodiment. A graph 1254 indicates a change in impedance of the electronic device 2 in a second folded state according to an embodiment. A graph 1256 indicates a change in impedance of the electronic device 2 in a third folded state according to an embodiment.

Referring to FIG. 12, the electronic device 1 according to an embodiment may have a smaller degree of change in impedance characteristics according to a state change than the electronic device 2 of the comparative example.

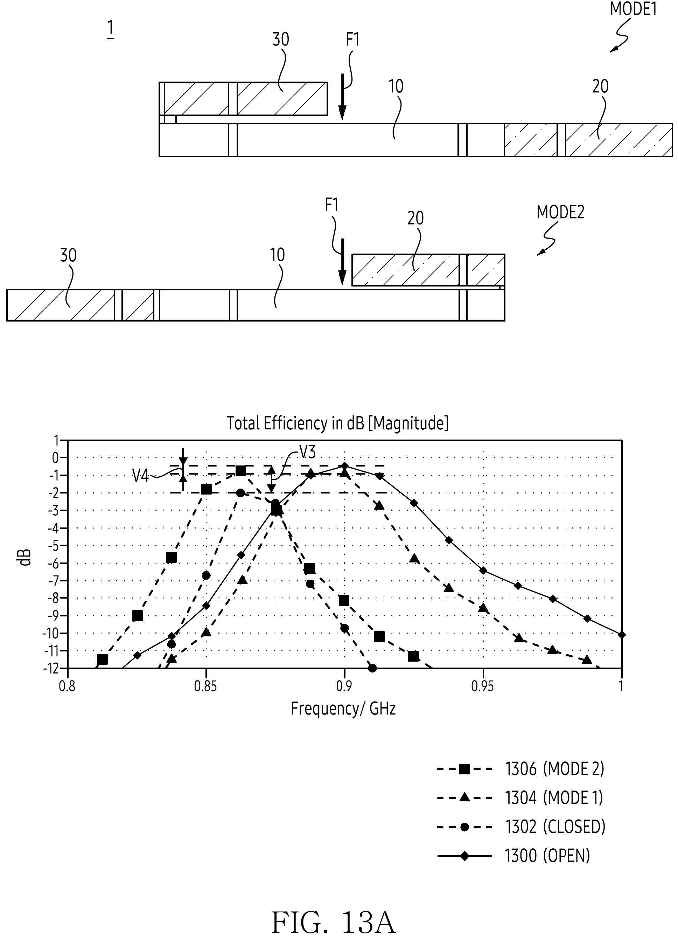

FIG. 13A is a view illustrating total efficiency of an electronic device and an antenna in a second folded state and a third folded state together according to an embodiment. FIG. 13A illustrates total efficiency in a case in which widths (e.g., the first width w1 or the second width w2 of FIG. 4) of a second housing 20 and a third housing 30 are substantially equal to each other. A graph 1300 of FIG. 13A indicates total efficiency of an electronic device 1 in an unfolded state (e.g., FIG. 2A) according to an embodiment, and a graph 1302 indicates total efficiency of the electronic device 1 in a first folded state according to an embodiment. A first mode (MODE 1) of FIG. 13A is the electronic device 1 in the second folded state (e.g., FIG. 2C), and total efficiency of the first mode is indicated as a graph 1304. A second mode (MODE 2) of FIG. 13A is the electronic device 1 in the third folded state (e.g., FIG. 2D), and total efficiency of the second mode is indicated as a graph 1306.

Referring to FIG. 13A, when the electronic device 1 according to an embodiment is changed from the unfolded state (e.g., the graph 1300) to the first folded state (e.g., the graph 1302), the total efficiency may be degraded by V3. When the electronic device 1 according to an embodiment is changed from the unfolded state (e.g., the graph 1300) to the second mode (e.g., the graph 1306), the total efficiency may be degraded by V4. In addition, when the electronic device 1 according to an embodiment is changed from the unfolded state (e.g., the graph 1300) to the first mode (e.g., the graph 1304), a degree to which the total efficiency is degraded may be smaller than V4.

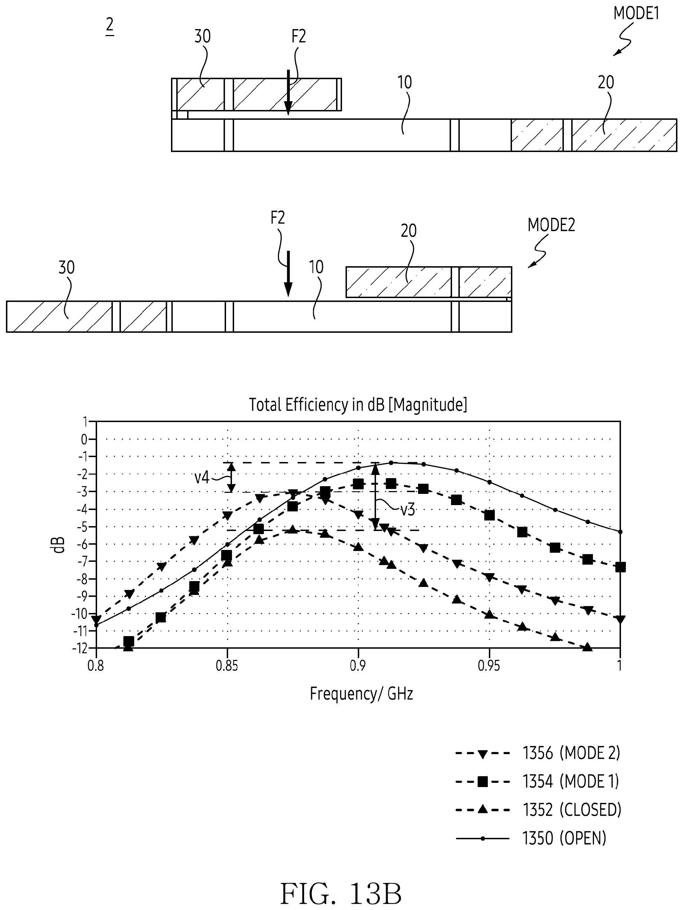

FIG. 13B is a view illustrating total efficiency of an electronic device and an antenna in a second folded state and a third folded state together according to a comparative example. FIG. 13B illustrates total efficiency in a case in which widths (e.g., the first width w1 or the second width w2 of FIG. 4) of the second housing 20 and the third housing 30 are substantially identical to each other. A graph 1350 of FIG. 13B indicates total efficiency of an electronic device 2 in an unfolded state (e.g., FIG. 6A) according to the comparative example, and a graph 1352 indicates total efficiency of the electronic device 2 in a first folded state (e.g., FIG. 6C) according to the comparative example. A first mode (MODE 1) of FIG. 13B is the electronic device 2 in the second folded state, and total efficiency of the first mode is indicated as a graph 1354. A second mode (MODE2) of FIG. 13B is the electronic device 2 in the third folded state, and total efficiency of the second mode is indicated as a graph 1356.

Referring to FIG. 13B, when the electronic device 2 according to the comparative example is changed from the unfolded state (e.g., the graph 1350) to the first folded state (e.g., the graph 1352), the total efficiency may be degraded by v3. When the electronic device 2 according to the comparative example is changed from the unfolded state (e.g., the graph 1350) to the second mode (e.g., the graph 1356), the total efficiency may be degraded by v4. In addition, when the electronic device 2 according to the comparative example is changed from the unfolded state (e.g., the graph 1300) to the first mode (e.g., the graph 1354), a degree to which the total efficiency is degraded may be smaller than v4.

When comparing FIG. 13A and FIG. 13B, when changing from the unfolded state to the first folded state, a degree to which performance is degraded may be smaller in the electronic device 1 according to an embodiment than the electronic device 2 of the comparative example. For example, the V3 of FIG. 13A may be about -3.5 dB, and the v3 of FIG. 13B may be about -5.0 dB. When simply compared with only dB values, the performance of the electronic device 1 according to the embodiment may be improved by about 30% compared to the electronic device 2 of the comparative example.

When comparing FIG. 13A and FIG. 13B, when changing from the unfolded state to the second mode (e.g., the third folded state), a degree to which performance is degraded may be smaller in the electronic device 1 according to an embodiment than the electronic device 2 of the comparative example. For example, the V4 of FIG. 13A may be about -0.5 dB, and the v4 of FIG. 13B may be about -2.0 dB.

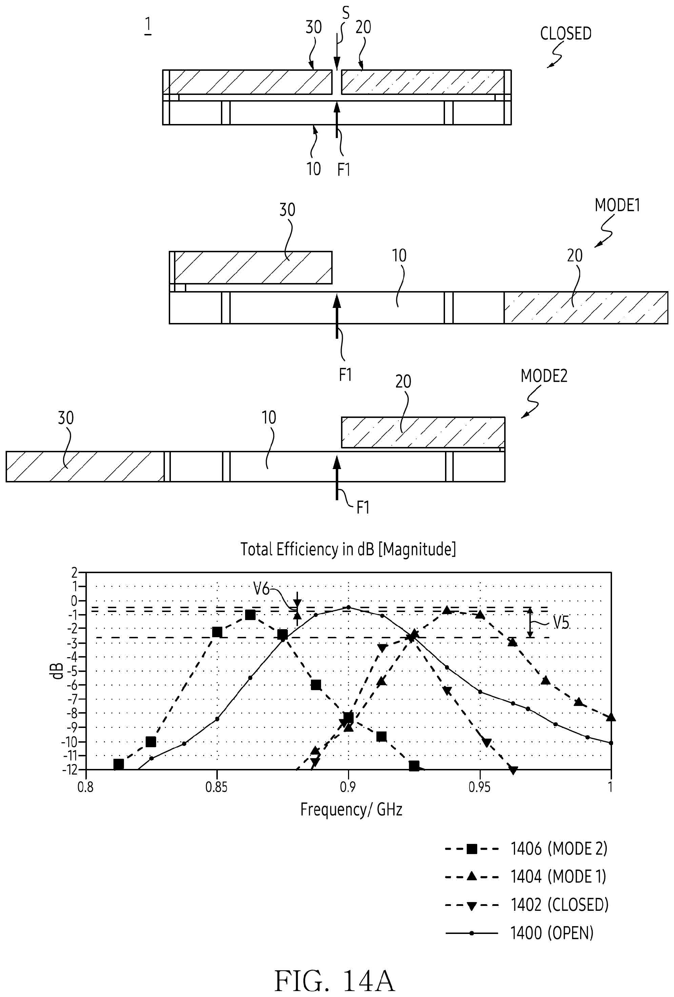

FIG. 14A is a view illustrating total efficiency of an electronic device and an antenna in a first folded state, a second folded state, and a third folded state together according to an embodiment. FIG. 14A illustrates total efficiency in a case in which a second housing 20 does not include the first non-conductive portion 202 of FIG. 3C, and a third housing 30 does not include the first non-conductive portion 302 of FIG. 3C. A graph 1400 of FIG. 14A indicates total efficiency of an electronic device 1 in an unfolded state (e.g., FIG. 2A), according to an embodiment. 'CLOSED' of FIG. 14A indicates the electronic device 1 in the first folded state (e.g., FIG. 2B), and the total efficiency thereof is indicated as a graph 1402. A first mode (MODE 1) of FIG. 14A is the electronic device 1 in the second folded state (e.g., FIG. 2C), and total efficiency of the first mode is illustrated as a graph 1404. A second mode (MODE 2) of FIG. 14A is the electronic device 1 in the third folded state (e.g., FIG. 2D), and the total efficiency of the second mode is illustrated as a graph 1406.

Referring to FIG. 14A, when the electronic device 1 according to an embodiment is changed from the unfolded state (e.g., the graph 1400) to the first folded state (e.g., the graph 1402), the total efficiency may be degraded by V5. When the electronic device 1 according to an embodiment is changed from the unfolded state (e.g., the graph 1400) to the second mode (e.g., the graph 1406), the total efficiency may be degraded by V6.

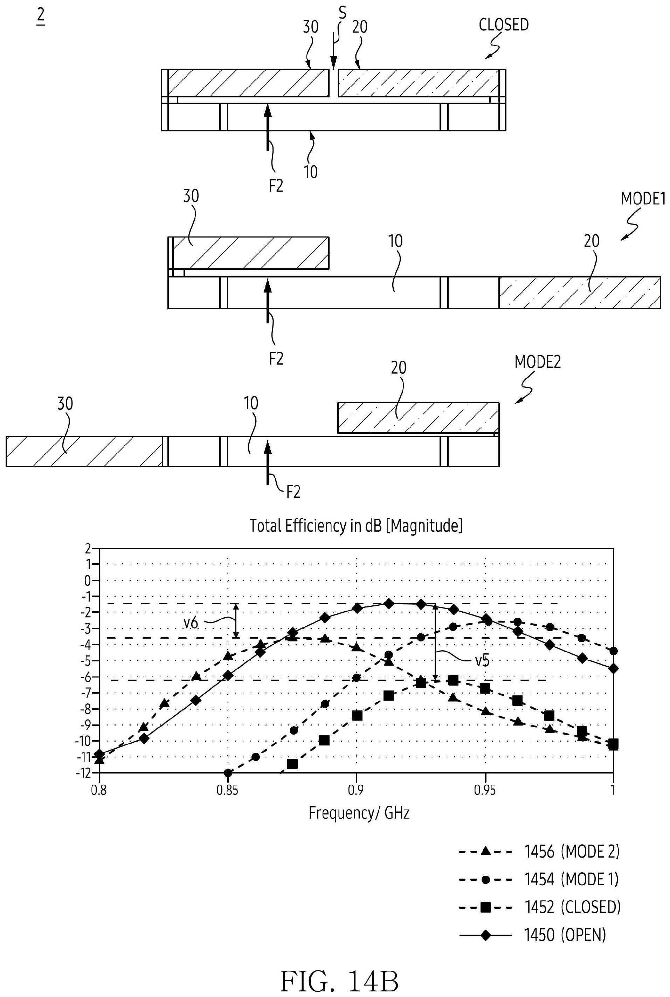

FIG. 14B is a view illustrating total efficiency of an electronic device and an antenna in a first folded state, a second folded state, and a third folded state together according to a comparative example. FIG. 14B illustrates total efficiency in a case in which the second housing 20 does not include the first non-conductive portion 202 of FIG. 6B, and the third housing 30 does not include the first non-conductive portion 302 of FIG. 6B. A graph 1450 of FIG. 14B indicates total efficiency of an electronic device 2 in an unfolded state (e.g., FIG. 6A), according to the comparative example. 'CLOSED' of FIG. 14B indicates the electronic device 2 in the first folded state, and the total efficiency thereof is indicated as a graph 1452. A first mode (MODE 1) of FIG. 14B is the electronic device 2 in the second folded state, and total efficiency of the first mode is indicated as a graph 1454. A second mode (MODE 2) of FIG. 14B is the electronic device 2 in the third folded state, and total efficiency of the second mode is indicated as a graph 1456.

Referring to FIG. 14B, when the electronic device 2 according to the comparative example is changed from the unfolded state (e.g., the graph 1450) to the first folded state (e.g., the graph 1452), the total efficiency may be degraded by v5. When the electronic device 2 according to the comparative example is changed from the unfolded state (e.g., the graph 1450) to the second mode (e.g., the graph 1456), the total efficiency may be degraded by v6.

When comparing FIG. 14A and FIG. 14B, when changing from the unfolded state to the first folded state, a degree to which performance is degraded may be smaller in the electronic device 1 according to an embodiment than the electronic device 2 according to the comparative example. For example, the V5 of FIG. 14A may be about -2.0 dB, and the v5 of FIG. 14B may be about -4.5 dB.

When comparing FIG. 14A and FIG. 14B, when changing from the unfolded state to the second mode (e.g., the third folded state), a degree to which performance is degraded may be smaller in the electronic device 1 according to an embodiment than the electronic device 2 according to the comparative example. For example, the V6 of FIG. 14A may be about -0.5 dB, and the v6 of FIG. 14B may be about -2.5 dB.

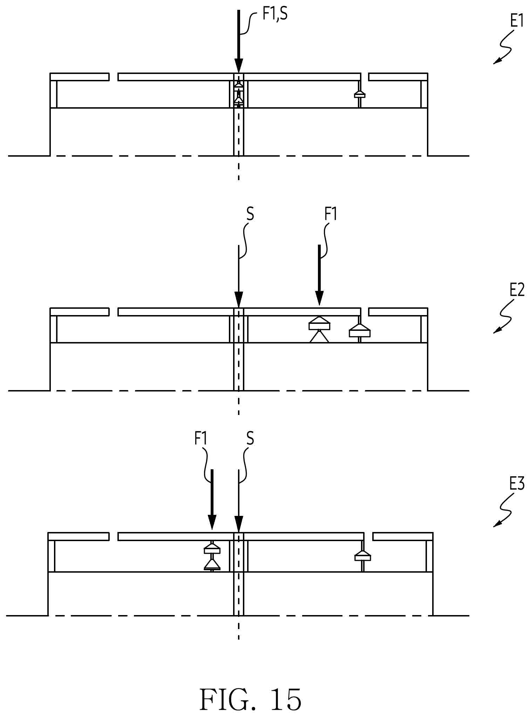

FIG. 15 illustrates examples of an electronic device in a first folded state, having feeding points at different locations. Referring to FIG. 15, in the first folded state, a location F1 of a feeding point and a location S of a slot of an example E1 may be aligned. In the first folded state, the location F1 of the feeding point and the location S of the slot of an example E2 and an example E3 may not be aligned. The example E3 may have the location F1 of the feeding point closer to the location S of the slot than the example E2. The example E1 may be an electronic device (e.g., the electronic device 1 of FIG. 2B) according to an embodiment. The example E2 may be an electronic device (e.g., the electronic device 2 of FIG. 6C) according to a comparative example.

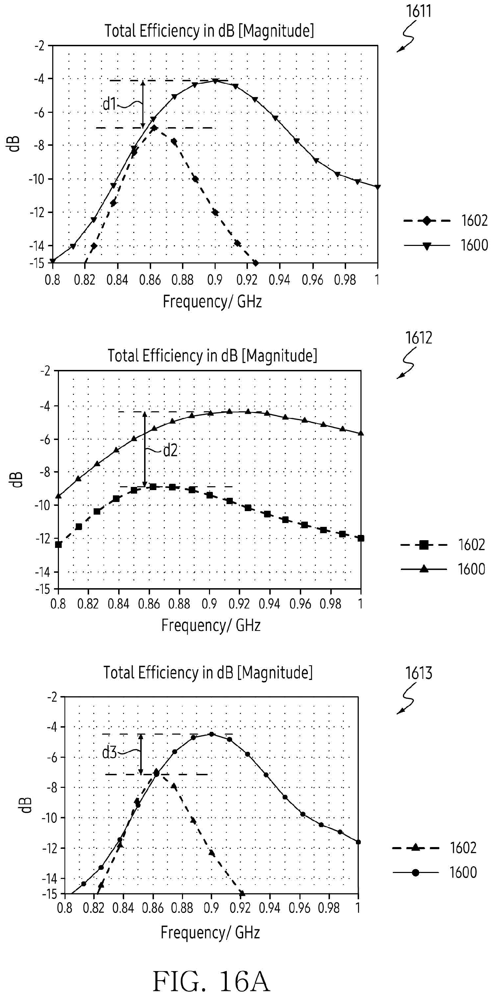

FIG. 16A is a view illustrating total efficiency according to the examples of FIG. 15. Graphs of FIG. 16A indicate total efficiency in a case in which, as illustrated in FIG. 3C, a first non-conductive portion 132 of a first housing 10 is aligned with a first non-conductive portion 202 of a second housing 20, and a second non-conductive portion 134 of the first housing 10 is aligned with a first non-conductive portion 302 of a third housing 30. A reference numeral 1611 of FIG. 16A indicates total efficiency of the example E1, a reference numeral 1612 indicates total efficiency of the example E2, and a reference numeral 1613 indicates total efficiency of the example E3. A graph 1600 of FIG. 16A indicates total efficiency in an unfolded state according to the examples of FIG. 15, and a graph 1602 indicates total efficiency in a first folded state according to the examples of FIG. 15. Referring to the reference numeral 1611 of FIG. 16A, the electronic device 1 of the example E1 is changed from the unfolded state to the first folded state, the total efficiency may be degraded by d1. Referring to the reference numeral 1612 of FIG. 16A, when the electronic device of the example E2 is changed from the unfolded state to the first folded state, the total efficiency may be degraded by d2. Referring to the reference numeral 1613 of FIG. 16A, when the electronic device of the example E3 is changed from the unfolded state to the first folded state, the total efficiency may be degraded by d3.

When comparing reference numerals 1611 and 1612, the d1 may be smaller than the d2. For example, the d1 may be about -2.8 dB, and the d2 may be about -4.5 dB. This may be because the feeding location F1 of the example E1 is aligned with a slot location S1, whereas the example E2 is not.

When comparing reference numerals 1612 and 1613, the d3 may be smaller than the d2. For example, the d3 may be about -2.8 dB, and the d2 may be about -4.5 dB. This may be because the feeding location F1 of the example E3 is closer to the location S of the slot than the example E2.

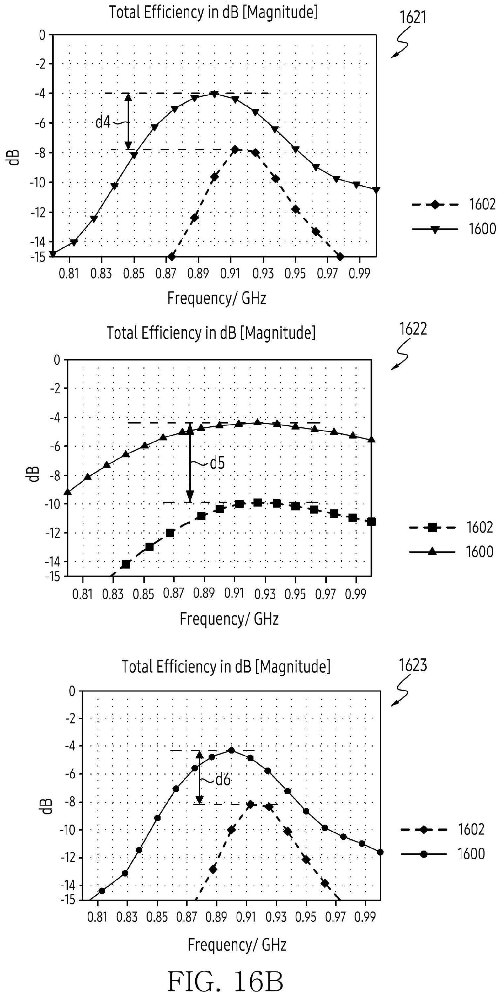

FIG. 16B is a view illustrating total efficiency according to the examples of FIG. 15. Graphs of FIG. 16B illustrate total efficiency in a case in which, , the first non-conductive portion 202 is not formed such that the first non-conductive portion 132 of the first housing 10 of FIG. 3C faces a conductive portion of the second housing 20, and the first non-conductive portion 302 is not formed such that the second non-conductive portion 134 of the first housing 10 faces a conductive portion of the third housing 30. A reference numeral 1621 of FIG. 16B indicates total efficiency of the example E1, a reference numeral 1622 indicates total efficiency of the example E2, and a reference numeral 1623 indicates total efficiency of the example E3. A graph 1600 of FIG. 16B indicates total efficiency in the unfolded state according to the examples of FIG. 15, and a graph 1602 indicates total efficiency in the first folded state according to the examples of FIG. 15. Referring to the reference numeral 1621 of FIG. 16B, when the electronic device 1 of the example E1 is changed from the unfolded state to the first folded state, the total efficiency may be degraded by d4. Referring to the reference numeral 1622 of FIG. 16B, when the electronic device of the example E2 is changed from the unfolded state to the first folded state, the total efficiency may be degraded by d5. Referring to the reference numeral 1623 of FIG. 16B, when the electronic device of the example E3 is changed from the unfolded state to the first folded state, the total efficiency may be degraded by d6.

When comparing reference numerals 1621 and 1622, the d4 may be smaller than the d5. For example, the d4 may be about -3.8 dB, and the d5 may be about -5.8 dB. This may be because the feeding position F1 of the example E1 is aligned with the slot location S1, whereas the example E2 is not.

When comparing reference numerals 1621, 1622, and 1623, the d4 may be smaller than the d6, and the d6 may be smaller than the d5. For example, the d4 may be about -3.8 dB, the d6 may be about -4.0 dB, and the d5 may be about -5.8 dB. This may be because, in an order of the example E1, the example E3, and the example E2, the feeding location F1 is closer to the location S of the slot.

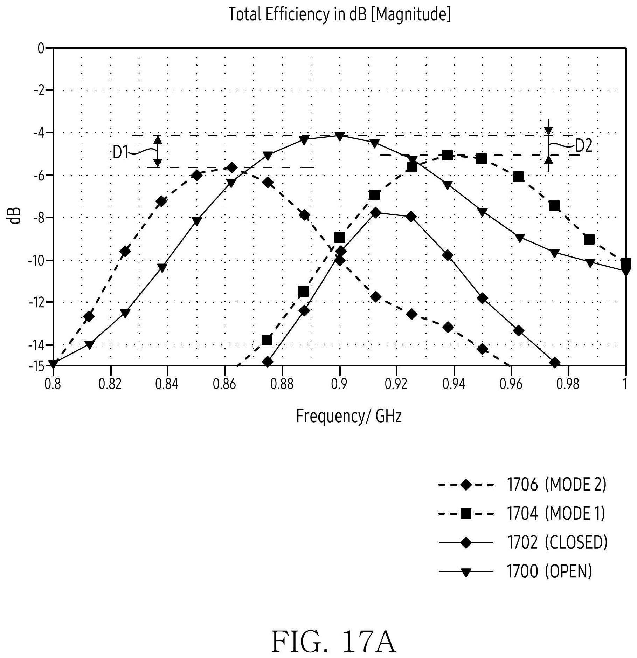

FIG. 17A is a graph illustrating total efficiency of the electronic device of the example E1 of FIG. 15 according to a state. A graph 1700, a graph 1702, a graph 1704, and a graph 1706 of FIG. 17A respectively indicate total efficiency in an unfolded state, a first folded state, a second folded state, and a third folded state.

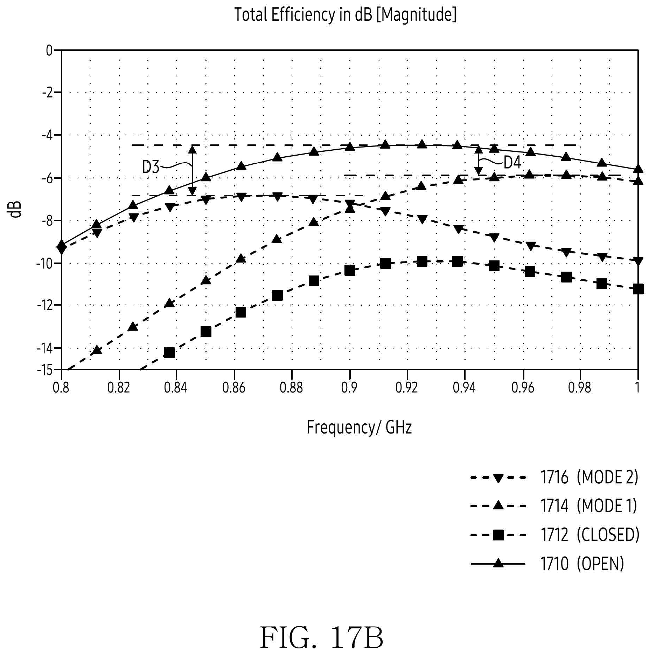

FIG. 17B is a graph illustrating total efficiency of the electronic device of the example E2 of FIG. 15 according to a state. A graph 1710, a graph 1712, a graph 1714, and a graph 1716 of FIG. 17B respectively indicate total efficiency in an unfolded state, a first folded state, a second folded state, and a third folded state.

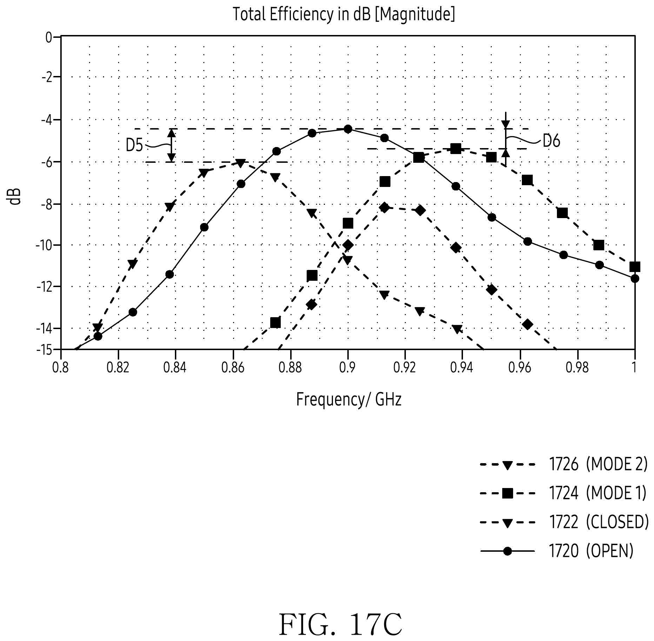

FIG. 17C is a graph illustrating total efficiency of the electronic device of the example E3 of FIG. 15 according to a state. A graph 1720, a graph 1722, a graph 1724, and a graph 1726 of FIG. 17C respectively indicate total efficiency in an unfolded state, a first folded state, a second folded state, and a third folded state.

FIG. 17A, FIG. 17B, and FIG. 17C illustrate total efficiency in a case in which, as illustrated in FIG. 3C, a first non-conductive portion 132 of a first housing 10 is aligned with a first non-conductive portion 202 of a second housing 20, and a second non-conductive portion 134 of the first housing 10 is aligned with a first non-conductive portion 302 of a third housing 30.

Table 1 below indicates values for each state and rates of change based on a peak of the graphs illustrated in FIG. 17A, FIG. 17B, and FIG. 17C.

**[Table 1]**

| | | Unfolded state | Second folded state | Third folded state | First folded state |
|---|---|---|---|---|---|
| Example (E1) | [dB] | -4.0 | -5.0 | -5.8 | -7.8 |
| | [mW] | 0.40 | 0.32 | 0.26 | 0.17 |
| | Rate of change compared to unfolded state [%] | - | 20.6 (D2) | 33.9 (D1) | 58.3 |
| Example (E2) | [dB] | -4.2 | -5.8 | -6.0 | -10.0 |
| | [mW] | 0.38 | 0.26 | 0.25 | 0.10 |
| | Rate of change compared to unfolded state [%] | | 30.8 (D4) | 33.9 (D3) | 73.7 |
| Example (E3) | [dB] | -4.2 | -5.5 | -6.1 | -8.2 |
| | [mW] | 0.38 | 0.28 | 0.25 | 0.15 |
| | Rate of change compared to unfolded state [%] | | 25.8 (D6) | 35.5 (D5) | 60.3 |

Referring to FIG. 17A, FIG. 17B, FIG. 17C, and Table 1, the example E1 may have a smallest change in gain according to a state change compared to the example E2 and the example E3. For example, the example E1 may secure a highest gain even when the folded state is changed.

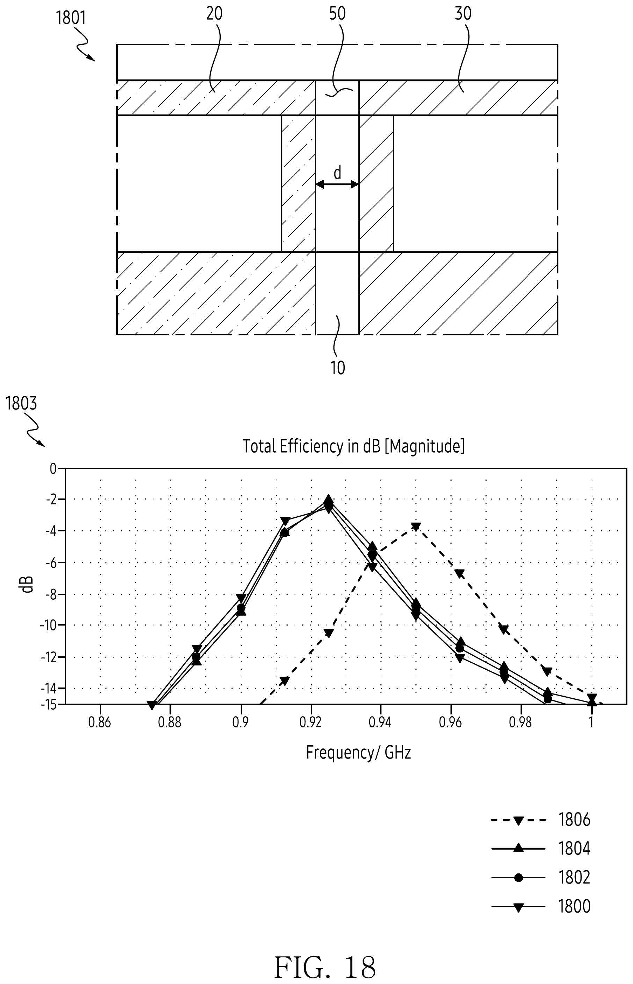

FIG. 18 is a view illustrating total efficiency according to a width of a slot. A reference numeral 1801 of FIG. 18 is a view illustrating a slot 50 between a second housing 20 and a third housing 30, and a reference numeral 1803 is a graph illustrating total efficiency according to a width d of the slot 50. Graphs 1800, 1802, 1804, and 1806 are total efficiency in a case in which the width d of the slot 50 is gradually decreased, and the graph 1806 is total efficiency in a case in which the second housing 20 and the third housing 30 are in contact.

Referring to FIG. 18, except for a case in which the second housing 20 and the third housing 30 are in contact as in the graph 1806, a large effect according to the width d of the slot 50 may substantially not exist.

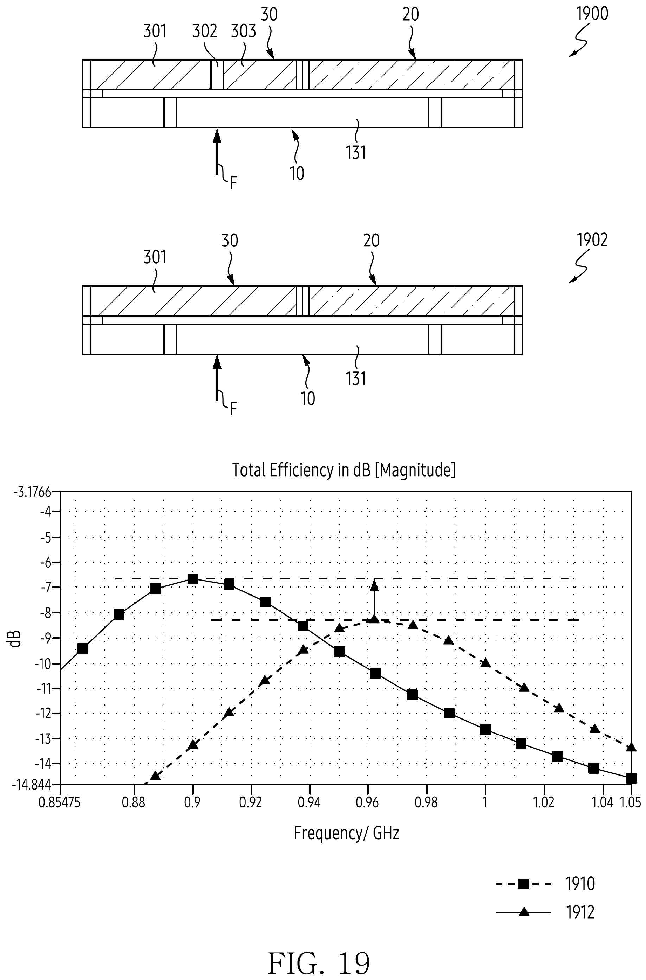

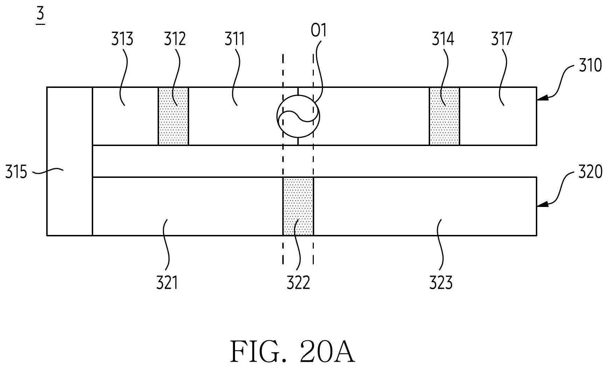

FIG. 19 is a graph illustrating total efficiency according to whether a feeding point of a first housing is aligned with a non-conductive portion of a third housing. A graph 1910 of FIG. 19 indicates total efficiency of an antenna of an electronic device 1900 (e.g., an electronic device 3 of FIG. 20A) according to an embodiment, and a graph 1912 indicates total efficiency of an antenna of an electronic device 1902 of a comparative example.

Referring to FIG. 19, in an embodiment, a feeding point F (e.g., a first point P1) of a first conductive portion 131 of an electronic device 1 in a second folded state may be aligned with a first non-conductive portion 302 of a third housing 30. In the comparative example, a feeding point F of a first conductive portion 131 of an electronic device 1902 in a folded state may be aligned with a first conductive portion 301 of a third housing 30.

Referring to graphs 1910 and 1912, radiation efficiency of the electronic device 1900 according to an embodiment may be improved compared to radiation efficiency of the electronic device 1902 of the comparative example. This may be because, in an embodiment, the first non-conductive portion 302 aligned with the feeding point F has substantially the same role as a slot (e.g., the slot 50 of FIG. 2B). For example, this may be because the first non-conductive portion 302 aligned with the feeding point F serves as an opening through which an electromagnetic field formed by the first conductive portion 131 may be extended.

FIG. 20A illustrates an exemplary electronic device according to an embodiment. Referring to FIG. 20A, in an embodiment, an electronic device 3 (e.g., the electronic device 2001 of FIG. 1) may include a plurality of housing parts. For example, the plurality of housing parts may include a first housing part 310 (e.g., the first housing 10 of FIG. 2A) and a second housing part 320 (e.g., the second housing 20 of FIG. 2A).

The electronic device 3 according to an embodiment may include a hinge structure 315 (e.g., the first hinge structure 15 of FIG. 2A) rotatably connecting the first housing part 310 and the second housing part 320. Through the hinge structure 315, the first housing part 310 and the second housing part 320 may be folded to face each other.

In an embodiment, the first housing part 310 may include a first conductive portion 311 (e.g., the first conductive portion 131 of FIG. 2A), a second conductive portion 313 (e.g., the second conductive portion 133 of FIG. 2A), a third conductive portion 317 (e.g., the third conductive portion 135 of FIG. 2A), a first non-conductive portion 312 (e.g., the first non-conductive portion 132 of FIG. 2A), and a second non-conductive portion 314 (e.g., the second non-conductive portion 134 of FIG. 2A). The first conductive portion 311, the second conductive portion 313, and the third conductive portion 317 may be spaced apart from each other. The second conductive portion 313 may extend between the hinge structure 315 and the first non-conductive portion 312. The first non-conductive portion 312 may be located between the first conductive portion 311 and the second conductive portion 313. The second non-conductive portion 314 may be located between the first conductive portion 311 and the third conductive portion 317.

In an embodiment, a first conductive portion 311 may include a first point O1 (e.g., the first point P1 of FIG. 3A) electrically connected to the wireless communication circuitry.

In an embodiment, the second housing part 320 may include a first conductive portion 321 (e.g., the first conductive portion 201 of FIG. 2A), a second conductive portion 323 (e.g., the second conductive portion 203 of FIG. 2A), and a first non-conductive portion 322 (e.g., the first non-conductive portion 202 of FIG. 2A). The first conductive portion 321 may extend between the hinge structure 315 and the first non-conductive portion 322. The first non-conductive portion 322 may be located between the first conductive portion 321 and the second conductive portion 323.

The electronic device 3 according to an embodiment may include a folded state (e.g., the first folded state of FIG. 2B) in which the first housing part 310 and the second housing part 320 are folded to face each other. In the folded state, the first point O1 of the first conductive portion 311 may be aligned with the first non-conductive portion 322 of the second housing part 320.

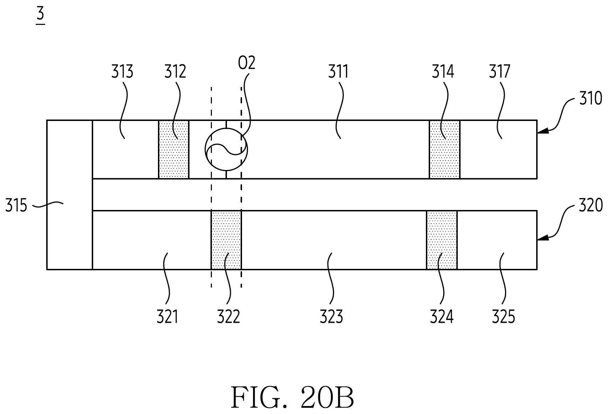

FIG. 20B illustrates an exemplary electronic device according to an embodiment. Referring to FIG. 20B, the second housing part 320 may further include a second non-conductive portion 324 and a third conductive portion 325. The second non-conductive portion 324 may be located between the second conductive portion 323 and the third conductive portion 325. The second non-conductive portion 324 may be aligned with the second non-conductive portion 314 of the first housing part 310 in the folded state.

In an embodiment, the first non-conductive portion 322 of the second housing part 320 may be disposed closer to the hinge structure 315 compared to FIG. 20A. In this case, the first conductive portion 311 of the first housing part 310 may be fed at a second point O2 aligned with the first non-conductive portion 322 of the second housing part 320.

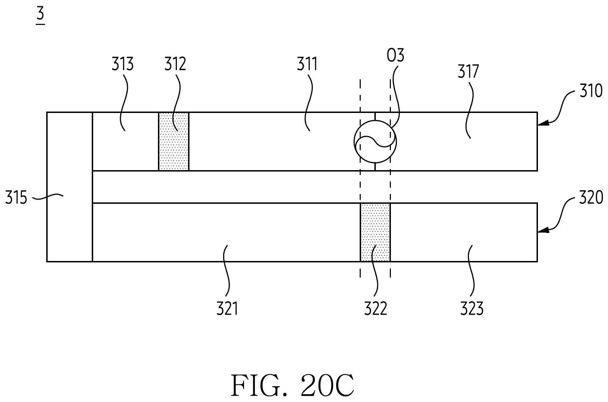

FIG. 20C illustrates an exemplary electronic device according to an embodiment.

Referring to FIG. 20C together with FIG. 20A and FIG. 20B, the electronic device 3 according to an embodiment may not include the second non-conductive portion 314 of the first housing part 310 and the second non-conductive portion 324 of the second housing part 320. For example, the first non-conductive portion 322 of the second housing part 320 may be located farther from the hinge structure 315 compared to the first non-conductive portion 322 of FIG. 20A and FIG. 20B. Accordingly, the first conductive portion 311 of the first housing part 310 may be fed at a third point O3 aligned with the first non-conductive portion 322 of the second housing part 320 in the folded state.

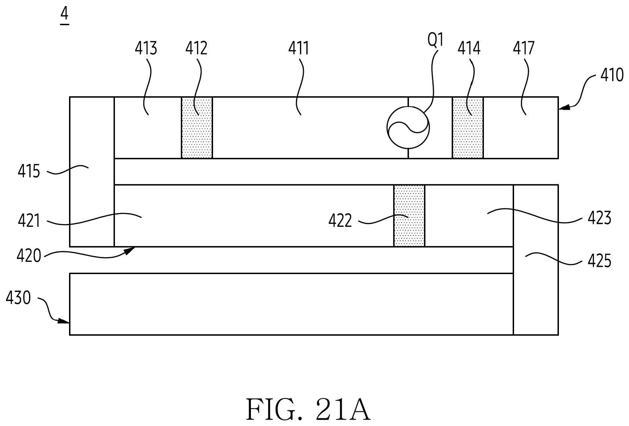

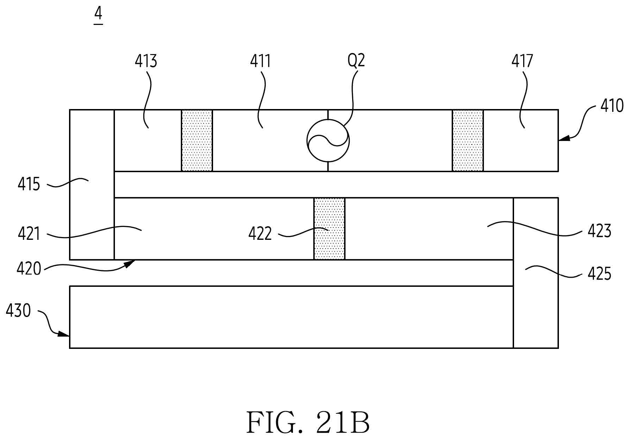

FIG. 21A and FIG. 21B are views illustrating an exemplary electronic device according to an embodiment. In an embodiment, an electronic device 4 (e.g., the electronic device 2001 of FIG. 1) may include a plurality of housing parts. For example, the plurality of housing parts may include a first housing part 410 (e.g., the second housing 20 of FIG. 2A), a second housing part 420 (e.g., the first housing 10 of FIG. 2A), and a third housing part 430 (e.g., the third housing 30 of FIG. 2A).

The electronic device 4 according to an embodiment may include a first hinge structure 415 (e.g., the first hinge structure 15 of FIG. 2A) rotatably connecting the first housing part 410 and the second housing part 420. Through the first hinge structure 415, the first housing part 410 and the second housing part 420 may be folded to face each other.

The electronic device 4 according to an embodiment may include a second hinge structure 425 (e.g., the second hinge structure 25 of FIG. 2A) rotatably connecting the second housing part 420 and the third housing part 430. Through the second hinge structure 425, the second housing part 420 and the third housing part 430 may be folded to face each other.

The electronic device 4 according to an embodiment may include a folded state (e.g., the first folded state of FIG. 2B) in which the first housing part 410 is folded to face a first surface (e.g., the first surface 10A of FIG. 2A) of the second housing part 420, and the third housing part 430 is folded to face a second surface (e.g., the second surface 10B of FIG. 2A) opposite to the first surface of the first housing part 410.

In an embodiment, the first housing part 410 may include a first conductive portion 411 (e.g., the first conductive portion 131 of FIG. 2A), a second conductive portion 413 (e.g., the second conductive portion 133 of FIG. 2A), a third conductive portion 417 (e.g., the third conductive portion 135 of FIG. 2A), a first non-conductive portion 412 (e.g., the first non-conductive portion 132 of FIG. 2A), and/or a second non-conductive portion 414 (e.g., the second non-conductive portion 134 of FIG. 2A). The first conductive portion 411, the second conductive portion 413, and the third conductive portion 417 may be spaced apart from each other. The second conductive portion 413 may extend from the first non-conductive portion 412 toward the first hinge structure 415. The first non-conductive portion 412 may be located between the first conductive portion 411 and the second conductive portion 413. The second non-conductive portion 414 may be located between the first conductive portion 411 and the third conductive portion 417.

In an embodiment, the second housing part 420 may include a first conductive portion 421 (e.g., the first conductive portion 201 of FIG. 2A), a second conductive portion 423 (e.g., the second conductive portion 203 of FIG. 2A), and a first non-conductive portion 422 (e.g., the first non-conductive portion 202 of FIG. 2A). The first conductive portion 421 may extend from the first non-conductive portion 422 toward the first hinge structure 415. The first non-conductive portion 422 may be located between the first conductive portion 421 and the second conductive portion 423.

In an embodiment, the first conductive portion 411 may include a first point Q1 (e.g., the first point P1 of FIG. 3A) electrically connected to the wireless communication circuitry. In the folded state, the first point Q1 of the first conductive portion 411 may be aligned with the first non-conductive portion 422 of the second housing part 420.

In an embodiment, the first non-conductive portion 422 of the second housing part 420 may be located closer to the second hinge structure 425 than the first hinge structure 415, but is not limited thereto. For example, referring to FIG. 21B, the first non-conductive portion 422 may be located at a center of the second housing part 420, or may be located closer to the first hinge structure 415 than the second hinge structure 425, unlike the illustration. In addition, like a second point Q2 of the first conductive portion 411, a location of a feeding point of the first conductive portion 411 may vary according to a location of the first non-conductive portion 422 of the second housing part 420.

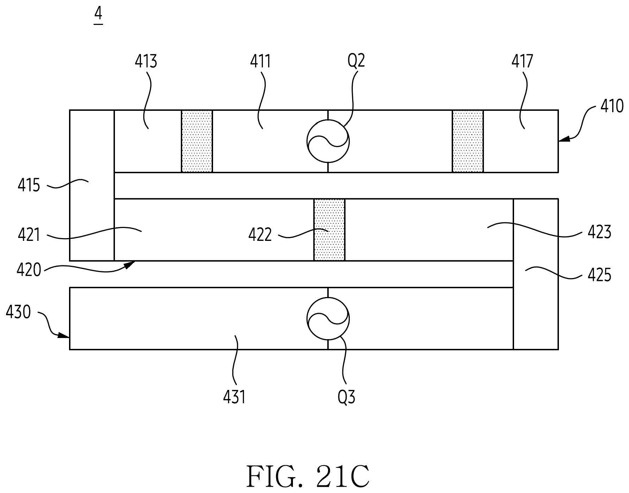

FIG. 21C is a view illustrating an exemplary electronic device according to an embodiment. Referring to FIG. 21C, the third housing part 430 may include a first conductive portion 431 (e.g., the first conductive portion 301 of FIG. 2A). In the folded state, a third point Q3 of the first conductive portion 431, which is fed by the wireless communication circuitry, may be aligned with the first non-conductive portion 422 of the second housing part 420.

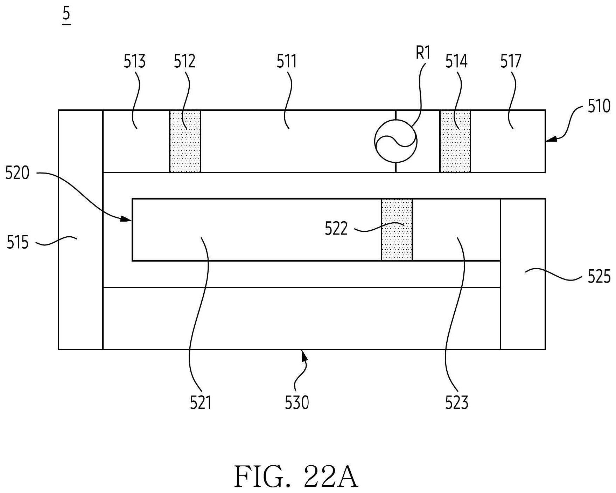

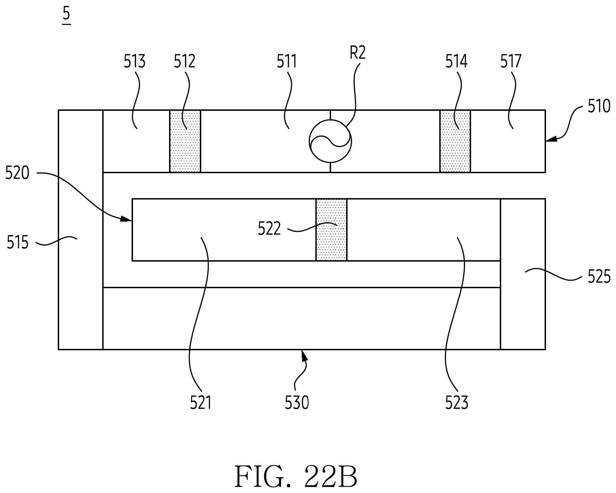

FIG. 22A and FIG. 22B are views illustrating an exemplary electronic device according to an embodiment. In an embodiment, an electronic device 5 (e.g., the electronic device 2001 of FIG. 1) may include a plurality of housing parts. For example, the plurality of housing parts may include a first housing part 510 (e.g., the first housing 10 of FIG. 2A), a second housing part 520 (e.g., the third housing 30 of FIG. 2A), and a third housing part 530 (e.g., the first housing 10 of FIG. 2A).

The electronic device 5 according to an embodiment may include a first hinge structure 515 (e.g., the first hinge structure 15 of FIG. 2A) rotatably connecting the first housing part 510 and the third housing part 530. Through the first hinge structure 515, the first housing part 510 and the third housing part 530 may be folded to face each other with the second housing part 520 interposed therebetween.

The electronic device 5 according to an embodiment may include a second hinge structure 525 (e.g., the second hinge structure 25 of FIG. 2A) rotatably connecting the second housing part 520 and the third housing part 530. Through the second hinge structure 525, the second housing part 520 and the third housing part 530 may be folded to face each other.

The electronic device 5 according to an embodiment may include a folded state (e.g., the first folded state of FIG. 2A). In the folded state, the second housing part 520 may be located between the first housing part 510 and the third housing part 530. For example, in the folded state, the third housing part 530, the second housing part 520, and the first housing part 510 may be stacked in order.

In an embodiment, the first housing part 510 may include a first conductive portion 511 (e.g., the first conductive portion 131 of FIG. 2A), a second conductive portion 513 (e.g., the second conductive portion 133 of FIG. 2A), a third conductive portion 517 (e.g., the third conductive portion 135 of FIG. 2A), a first non-conductive portion 512 (e.g., the first non-conductive portion 132 of FIG. 2A), and/or a second non-conductive portion 514 (e.g., the second non-conductive portion 134 of FIG. 2A). The first conductive portion 511, the second conductive portion 513, and the third conductive portion 517 may be spaced apart from each other. The first non-conductive portion 512 may be located between the first conductive portion 511 and the second conductive portion 513. The second non-conductive portion 514 may be located between the first conductive portion 511 and the third conductive portion 517.

In an embodiment, the second housing part 520 may include a first conductive portion 521 (e.g., the first conductive portion 201 of FIG. 2A), a second conductive portion 523 (e.g., the second conductive portion 203 of FIG. 2A), and/or a first non-conductive portion 522 (e.g., the first non-conductive portion 202 of FIG. 2A). The first non-conductive portion 522 may be located between the first conductive portion 521 and the second conductive portion 523.

In an embodiment, the first conductive portion 511 may include a first point R1 (e.g., the first point P1 of FIG. 3A) electrically connected to the wireless communication circuitry. In the folded state, the first point R1 of the first conductive portion 511 may be aligned with the first non-conductive portion 522 of the second housing part 520.

In an embodiment, the first non-conductive portion 522 of the second housing part 520 may be located closer to the second hinge structure 525 than to an end portion of the second housing part 520 opposite to the second hinge structure 525, but is not limited thereto. For example, referring to FIG. 22B, the first non-conductive portion 522 may be located at a center of the second housing part 520, or may be located closer to the end portion of the second housing part 520 than the second hinge structure 525, unlike the illustration. For example, like a second point R2 of the first conductive portion 511, a location of a feeding point of the first conductive portion 511 may vary according to a location of the first non-conductive portion 522 of the second housing part 520. For example, the location of the first non-conductive portion 522 may be determined according to the location of the feeding point of the first conductive portion 511.

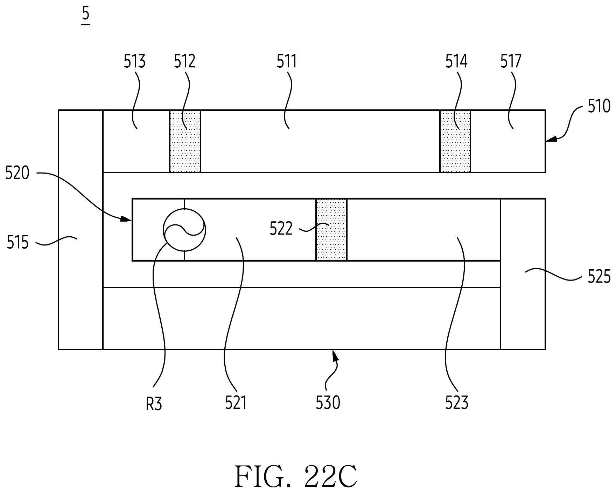

FIG. 22C is a view illustrating an exemplary electronic device according to an embodiment. Referring to FIG. 22C, the first conductive portion 521 of the second housing part 520 may include a third point R3. For example, the first conductive portion 521 of the second housing part 520 may operate as a radiator of an antenna. The third point R3 may be aligned with the first non-conductive portion 512 of the first housing part 510 in the folded state. The wireless communication circuitry may feed the first conductive portion 521 of the second housing part 520 by being electrically connected to the third point R3. Additionally or alternatively, the first conductive portion 511 may include a feeding point (e.g., the second point R2 of FIG. 22B) aligned with the first non-conductive portion 522 of the second housing part 520 in the folded state.

According to an embodiment, an electronic device (e.g., the electronic device 1 of FIG. 2A) may comprise a first housing (e.g., the first housing 10 of FIG. 2A), a second housing (e.g., the second housing 20 of FIG. 2A), a third housing (e.g., the third housing 30 of FIG. 2A), and wireless communication circuitry (e.g., the wireless communication module 2092 of FIG. 1). The first housing may include a first side part (e.g., the first side part 11 of FIG. 2A), a second side part opposite to the first side part (e.g., the second side part 12 of FIG. 2A), and a third side part (e.g., the third side part 13 of FIG. 2A) extending from the first side part to the second side part. The second housing may be rotatably coupled to the first side part of the first housing. The third housing may be rotatably coupled to the second side part of the first housing. The third side part of the first housing may include a conductive portion (e.g., the first conductive portion 131 of FIG. 2A). In a state in which the second housing and the third housing are rotated to overlap a surface of the first housing, a slot (e.g., the slot 50 of FIG. 2B) aligned with a first point (e.g., the first point P1 of FIG. 3A) of the conductive portion may be formed between the second housing and the third housing. The wireless communication circuitry may be electrically connected to the first point of the conductive portion and configured to transmit or receive a radio frequency (RF) signal using the conductive portion.

In an embodiment, the third side part may include a first non-conductive portion (e.g., the first non-conductive portion 132 of FIG. 2A) and a second non-conductive portion (e.g., the second non-conductive portion 134 of FIG. 2A) spaced apart from the first non-conductive portion. In the state in which the second housing and the third housing are rotated to overlap the surface of the first housing, the first non-conductive portion may overlap the second housing. In the state in which the second housing and the third housing are rotated to overlap the surface of the first housing, the second non-conductive portion may overlap the third housing. The conductive portion may extend from the first non-conductive portion to the second non-conductive portion.

In an embodiment, the conductive portion may be grounded at a second point (e.g., the second point P2 of FIG. 3A) spaced apart from the first point.

In an embodiment, the conductive portion may include a first end portion (e.g., the first end portion 131a of FIG. 2A) in contact with the first non-conductive portion and a second end portion (e.g., the second end portion 131b of FIG. 2A) in contact with the second non-conductive portion. The second point may be located at the second end portion.

In an embodiment, the first point may be located between the first end portion and the second point.

In an embodiment, a first distance from the first point to the first non-conductive portion may be substantially equal to a second distance from the first point to the second non-conductive portion.

In an embodiment, the conductive portion may extend in a first direction from the first non-conductive portion to the second non-conductive portion. Each of the second housing and the third housing may rotate about at least one axis extending in a second direction perpendicular to the first direction. A length of the second housing along the first direction may be substantially the same as a length of the third housing along the first direction.

In an embodiment, a first distance from the first point to the first non-conductive portion may be greater than a second distance from the first point to the second non-conductive portion.

In an embodiment, the conductive portion may extend in a first direction from the first non-conductive portion to the second non-conductive portion. Each of the second housing and the third housing may rotate about at least one axis extending in a second direction perpendicular to the first direction. A length of the second housing along the first direction may be greater than a length of the third housing along the first direction.

In an embodiment, the second housing may include a first non-conductive portion (e.g., the first non-conductive portion 202 of FIG. 2A). The first non-conductive portion of the second housing may be aligned with the first non-conductive portion of the first housing in a state in which the second housing is rotated to overlap the surface of the first housing.

In an embodiment, the third housing may include a first non-conductive portion (e.g., the first non-conductive portion 302 of FIG. 2A). The first non-conductive portion of the third housing may be aligned with the second non-conductive portion of the first housing in a state in which the third housing is rotated to overlap the surface of the first housing.

In an embodiment, the second housing may include a first conductive portion (e.g., the first conductive portion 201 of FIG. 2A). The first non-conductive portion of the first housing may overlap the first conductive portion of the second housing in a state in which the second housing is rotated to overlap the surface of the first housing.

In an embodiment, the second housing may include a first non-conductive portion (e.g., the first non-conductive portion 202 of FIG. 2A) in contact with the first conductive portion. The first non-conductive portion of the second housing may overlap the conductive portion of the first housing in a state in which the second housing is rotated to overlap the surface of the first housing.

In an embodiment, the third housing may include a first conductive portion (e.g., the first conductive portion 301 of FIG. 2A). The second non-conductive portion of the first housing may overlap the first conductive portion of the third housing in a state in which the third housing is rotated to overlap the surface of the first housing.

In an embodiment, the third housing may include a first non-conductive portion (e.g., the first non-conductive portion 302 of FIG. 2A) in contact with the first conductive portion of the third housing. The first non-conductive portion of the third housing may overlap the conductive portion of the first housing in a state in which the third housing is rotated to overlap the surface of the first housing.

In an embodiment, it may comprise a non-conductive material at least partially filled in the slot.

The electronic device according to an embodiment may comprise a flexible display (e.g., the first display 60 of FIG. 2A). The flexible display may include a first part (e.g., the first part 61 of FIG. 2A) aligned with respect to the first housing, a second part (e.g., the second part 62 of FIG. 2A) aligned with respect to the second housing and extending from a first side of the first part, and a third part (e.g., the third part 63 of FIG. 2A) aligned with respect to the third housing and extending from a second side of the first part opposite to the first side.

The electronic device according to an embodiment may comprise a first display (e.g., the second display 65 of FIG. 2A) disposed on the second housing to be opposite to the second part, and a second display (e.g., the third display 65 of FIG. 2A) disposed on the third housing to be opposite to the third part.

In an embodiment, the surface of the first housing may be a surface of the first part. In the state in which the second housing and the third housing are rotated to overlap the surface of the first housing, each of the second part and the third part of the flexible display may face the first part.

In an embodiment, the surface of the first housing may be a rear surface of the first housing, a second surface 10B of the first display of the first housing, opposite to the surface of the first part of the flexible display. In the state in which the second housing and the third housing are rotated to overlap the surface of the first housing, the first part of the flexible display may face a first direction. In the state in which the second housing and the third housing are rotated to overlap the surface of the first housing, each of the second part and the third part may face a second direction opposite to the first direction.

According to an embodiment, an electronic device (e.g., the electronic device 3 of FIG. 20A, the electronic device 4 of FIG. 21A, or the electronic device 5 of FIG. 22A) may include a plurality of housing parts including a first housing part (e.g., the first housing part 310 of FIG. 20A, the first housing part 410 of FIG. 21A, or the first housing part 510 of FIG. 22A) and a second housing part (e.g., the second housing part 320 of FIG. 20A, the second housing part 420 of FIG. 21A, or the second housing part 520 of FIG. 22A), and at least one wireless communication circuitry (e.g., the wireless communication module 2092 of FIG. 1). The plurality of housing parts may be foldable such that the first housing part and the second housing part face each other. The first housing part may include a conductive portion (e.g., the first conductive portion 311 of FIG. 20A, the first conductive portion 411 of FIG. 21A, or the first conductive portion 511 of FIG. 22A). The second housing part may include a non-conductive portion (e.g., the first non-conductive portion 322 of FIG. 20A, the first non-conductive portion 422 of FIG. 21A, or the first non-conductive portion 522 of FIG. 22A). In a state in which the plurality of housing parts are folded such that the first housing part and the second housing part face each other, a first point (e.g., the first point O1 of FIG. 20A, the first point Q1 of FIG. 21A, or the first point R1 of FIG. 22A) of the conductive portion may be aligned with the non-conductive portion. The at least one wireless communication circuitry may be electrically connected to the first point of the conductive portion and configured to transmit or receive a radio frequency (RF) signal using the conductive portion.

In an embodiment, the first housing part may include a first non-conductive portion (e.g., the first non-conductive portion 312 of FIG. 20A). The second housing part may include a conductive portion (e.g., the first conductive portion 321 of FIG. 20A) extending from the non-conductive portion. In the state in which the plurality of housing parts are folded such that the first housing part and the second housing part face each other, the first non-conductive portion of the first housing part may overlap the conductive portion of the second housing part.

In an embodiment, the first housing part may include a second non-conductive portion (e.g., the second non-conductive portion 314 of FIG. 20A) spaced apart from the first non-conductive portion. The conductive portion of the first housing part may extend from the first non-conductive portion to the second non-conductive portion.

The electronic device according to an embodiment may include a hinge structure (e.g., the hinge structure 315 of FIG. 20B) rotatably coupling the first housing part and the second housing part. The first non-conductive portion may be closer to the hinge structure than the second non-conductive portion. The first point may be located closer to the first non-conductive portion than the second non-conductive portion. The second housing part may include another non-conductive portion (e.g., the second non-conductive portion 324 of FIG. 20B) spaced apart from the non-conductive portion. In a state in which the first housing part and the second housing part are folded to face each other, the another non-conductive portion of the second housing part may overlap the second non-conductive portion of the first housing part.

In an embodiment, the plurality of housing parts may include a third housing part (e.g., the third housing part 430 of FIG. 21A). The first housing part may be rotatably connected to a first side of the second housing part. The third housing part may be rotatably connected to a second side of the second housing part opposite to the first side. The plurality of housing parts may be foldable such that the first housing part, the second housing part, and the third housing part are stacked in order.

In an embodiment, the third housing part may include a conductive portion (e.g., the first conductive portion 431 of FIG. 21C). In a state in which the plurality of housing parts are folded such that the first housing part, the second housing part, and the third housing part are stacked in order, the non-conductive portion of the second housing part may be aligned with a first point (e.g., the second point Q2 of FIG. 21C) of the conductive portion of the first housing part and a first point (e.g., the third point Q3 of FIG. 21C) of the conductive portion of the third housing part. The at least one wireless communication circuitry may be electrically connected to the first point of the conductive portion of the third housing part and configured to transmit or receive a radio frequency (RF) signal using the conductive portion of the third housing part.

In an embodiment, the plurality of housing parts may include a third housing part (e.g., the third housing part 530 of FIG. 22A). The first housing part may be rotatably connected to a first side of the third housing part. The second housing part may be rotatably connected to a second side of the third housing part opposite to the first side. The plurality of housing parts may be foldable such that the first housing part, the second housing part, and the third housing part are stacked in order.

In an embodiment, the plurality of housing parts may include a third housing part. The first housing part may be rotatably connected to a first side of the third housing part. The second housing part may be rotatably connected to a second side of the third housing part opposite to the first side.

In an embodiment, the plurality of housing parts may be foldable such that the second housing part, the first housing part, and the third housing part are stacked in order.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2040) including one or more instructions that are stored in a storage medium (e.g., internal memory 2036 or external memory 2038) that is readable by a machine (e.g., the electronic device 2001). For example, a processor (e.g., the processor 2020) of the machine (e.g., the electronic device 2001) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a first housing including a first side part, a second side part opposite to the first side part, and a third side part extending from the first side part to the second side part;
a second housing rotatably coupled to the first side part of the first housing;
a third housing rotatably coupled to the second side part of the first housing; and
wireless communication circuitry, and wherein:
the third side part of the first housing includes a conductive portion;
in a state in which the second housing and the third housing are rotated to overlap a surface of the first housing, a slot aligned with a first point of the conductive portion is formed between the second housing and the third housing; and
the wireless communication circuitry is electrically connected to the first point of the conductive portion and configured to transmit or receive a radio frequency (RF) signal using the conductive portion.

2. The electronic device of claim 1, wherein:
the third side part includes a first non-conductive portion and a second non-conductive portion spaced apart from the first non-conductive portion;
in the state in which the second housing and the third housing are rotated to overlap the surface of the first housing:
the first non-conductive portion overlaps the second housing; and
the second non-conductive portion overlaps the third housing; and
the conductive portion extends from the first non-conductive portion to the second non-conductive portion.

3. The electronic device of claim 2, wherein
the conductive portion is grounded at a second point spaced apart from the first point.

4. The electronic device of claim 3, wherein:
the conductive portion includes a first end portion in contact with the first non-conductive portion and a second end portion in contact with the second non-conductive portion; and
the second point is located at the second end.

5. The electronic device of claim 4,
wherein the first point is located between the first end and the second point.

6. The electronic device of claim 5,
wherein a first distance from the first point to the first non-conductive portion is substantially equal to a second distance from the first point to the second non-conductive portion.

7. The electronic device of claim 5 or claim 6, wherein:
the conductive portion extends in a first direction from the first non-conductive portion to the second non-conductive portion;
each of the second housing and the third housing rotates about at least one axis extending in a second direction perpendicular to the first direction;
a length of the second housing along the first direction is substantially the same as a length of the third housing along the first direction.

8. The electronic device of claim 5,
wherein a first distance from the first point to the first non-conductive portion is greater than a second distance from the first point to the second non-conductive portion.

9. The electronic device of claim 5 or claim 8, wherein:
the conductive portion extends in a first direction from the first non-conductive portion to the second non-conductive portion;
each of the second housing and the third housing rotates about at least one axis extending in a second direction perpendicular to the first direction; and
a length of the second housing along the first direction is greater than a length of the third housing along the first direction.

10. The electronic device of claim 2, wherein:
the second housing includes a first non-conductive portion; and
the first non-conductive portion of the second housing is aligned with the first non-conductive portion of the first housing in a state in which the second housing is rotated to overlap the surface of the first housing.

11. The electronic device of claim 2 or claim 10, wherein:
the third housing includes a first non-conductive portion; and
the first non-conductive portion of the third housing is aligned with the second non-conductive portion of the first housing in a state in which the third housing is rotated to overlap the surface of the first housing.

12. The electronic device of claim 2, wherein:
the second housing includes a first conductive portion; and
the first non-conductive portion of the first housing overlaps the first conductive portion of the second housing in a state in which the second housing is rotated to overlap the surface of the first housing.

13. The electronic device of claim 12, wherein:
the second housing includes a first non-conductive portion in contact with the first conductive portion; and
the first non-conductive portion of the second housing overlaps the conductive portion of the first housing in a state in which the second housing is rotated to overlap the surface of the first housing.

14. The electronic device of claim 2, claim 12 or claim 13, wherein:
the third housing includes a first conductive portion, and
the second non-conductive portion of the first housing overlaps the first conductive portion of the third housing in a state in which the third housing is rotated to overlap the surface of the first housing.

15. The electronic device of claim 14, wherein:
the third housing includes a first non-conductive portion in contact with the first conductive portion of the third housing; and
the first non-conductive portion of the third housing overlaps the conductive portion of the first housing in a state in which the third housing is rotated to overlap the surface of the first housing.
